(19) **Europäisches Patentamt**

**European Patent Office**

**Office européen des brevets**

(11) Veröffentlichungsnummer : **0 374 297 B1**

## (12) EUROPÄISCHE PATENTSCHRIFT

(45) Veröffentlichungstag der Patentschrift :
**26.04.95 Patentblatt 95/17**

(51) Int. Cl.$^6$ : **G06F 17/14**

(21) Anmeldenummer : **88121545.3**

(22) Anmeldetag : **23.12.88**

(54) **Verfahren zur Durchführung einer zweidimensionalen Spektraltransformation oder Spektralrücktransformation.**

(43) Veröffentlichungstag der Anmeldung :
**27.06.90 Patentblatt 90/26**

(45) Bekanntmachung des Hinweises auf die Patenterteilung :
**26.04.95 Patentblatt 95/17**

(84) Benannte Vertragsstaaten :
**DE FR GB IT NL**

(56) Entgegenhaltungen :
**IEEE TRANSACTIONS ON COMPUTERS, Band C-36, Nr. 11, November 1987, Seiten 1265-1274, IEEE, New York, NY, US; I. GERTNER et al.: "VLSI architectures for multidimensional fourier transform processing" RADIOELECTRONICS & COMMUNICATIONS SYSTEMS, Band 29, Nr. 1, 1986, Seiten 87-90, Allerton Press, Inc., New York, NY, US; V.A. VLASENKO et al.: "A matrix approach to the construction of fast multidimensional discrete fourier transform algorithms"**

(73) Patentinhaber : **ANT Nachrichtentechnik GmbH**
**Gerberstrasse 33**
**D-71522 Backnang (DE)**

(72) Erfinder : **Singer, Rolf Peter, Dipl.-Ing.**
**Elly-Heuss-Knapp Weg 19**
**D-7150 Backnang (DE)**

EP 0 374 297 B1

**Beschreibung**

Die vorliegende Erfindung betrifft ein Verfahren zur Durchführung einer zweidimensionalen Spektraltransformation nach dem Oberbegriff der Patentansprüche 1 oder 3 oder zur Durchführung einer zweidimensionalen Spektralrücktransformation nach dem Oberbegriff der Patentansprüche 2 oder 4.

Die rasante Weiterentwicklung im Bereich der Höchstintegration digitaler Schaltungen bietet in fortschreitendem Maße die Möglichkeit der Entwicklung und Einführung neuer, digitaler Kommunikationsdienste. Vor allem im Zusammenhang mit der geplanten Einführung eines dienstintegrierten digitalen Netzes (ISDN) wird der Einsatz von Bildübertragungssystemen zunehmend interessanter. Zur Reduktion der Datenmenge werden bei solchen Systemen häufig Codierungsverfahren eingesetzt, die sich einer Spektraltransformation, wie der diskreten Fourier-, der diskreten Cosinus-, der Walsh-Hadamard-, der Haar- oder der Slant-Transformation für zweidimensionale Signale bedienen. Allerdings ist die Berechnung der Koeffizienten des Spektralbereiches wegen der großen Zahl an arithmetischen Operationen mit großem Aufwand verbunden.

Aus der EP 02 89 629 ist ein Verfahren zur zweidimensionalen Spektraltransformation eines Datensatzes bekannt, wobei die einzelnen Daten aus dem Originalbereich in Koeffizienten des Spektralbereichs transformiert werden. Mit dem Verfahren kann eine Spektraltransformation mit geringem Aufwand ausgeführt werden. Dazu wird die zweidimensionale Transformation in zwei eindimensionale Transformationen separiert, die dann für horizontale und vertikale Strukturen nacheinander durchgeführt werden. Die zu transformierenden Daten werden als Elemente einer ersten Matrix in einen ersten Speicher eingeschrieben. Dann wird eine in einem zweiten Speicher vorliegende Transformationsmatrix mit Hilfe von Multiplizier- und Addiereinrichtungen mit der transponierten Datenmatrix multipliziert und die resultierende Matrix in einen dritten Speicher eingeschrieben. Anschließend wird die Transformationsmatrix mit der transponierten resultierenden Matrix aus dem dritten Speicher multipliziert. Die Ergebnismatrix, deren Elemente die Spektralkoeffizienten sind, wird im ersten Speicher abgelegt.

Zweidimensionale Spektraltransformationen sind theoretisch beschrieben in dem Buch von N. Ahmed, K. R. Rao, "Orthogonal Transforms for Digital Signal Processing", Berlin, Heidelberg, New York, 1975.

Zur Beschreibung einer zweidimensionalen Spektraltransformation ist es sinnvoll, einen Transformationstensor einzuführen. Ein Tensor ist eine Matrix, deren Elemente wiederum Matrizen sind. Zur Erläuterung der Tensoralgebra sei an dieser Stelle auf Kowalsky "Lineare Algebra", de Gruyter Lehrbuch, Berlin, New York 1979, 9. Auflage, Seiten 298 bis 330 verwiesen.

Weiterhin ist es bekannt, daß bei einer eindimensionalen Spektraltransformation eine Reduktion der Zahl der arithmetischen Operationen, insbesondere der Multiplikationen, durch eine Faktorisierung der Transformationsmatrix erreichbar ist. Ein Beispiel für eine mögliche Zerlegung für eine diskrete Cosinus-Transformation ist aus B. G. Lee, "A new algorithm to compute the DCT" ASSP-32, pp. 1243 - 1245, Dec. 1984, bekannt.

Der Erfindung liegt nun die Aufgabe zugrunde, ein Verfahren zur Durchführung einer zweidimensionalen Spektraltransformation oder Spektralrücktransformation anzugeben, mit dem eine separierbare Spektraltransformation mit reduziertem Aufwand ausgeführt werden kann. Weiter war es Aufgabe der Erfindung, eine Anwendung des Verfahrens anzugeben.

Die Aufgabe wird bezüglich der Spektraltransformation durch ein Verfahren mit den Merkmalen der Patentansprüche 1 oder 3 gelöst und bezüglich der Spektralrücktransformation durch ein Verfahren mit den Merkmalen der Patentansprüche 2 oder 4. Eine Anwendung ist in Unteranspruch 15 angegeben. Vorteilhafte Weiterbildungen des Verfahrens zur Durchführung einer zweidimensionalen Spektraltransformation sind in den Unteransprüchen angegeben.

Beim erfindungsgemäßen Verfahren wird die zweidimensionale Transformation nicht in zwei eindimensionale Transformationen zerlegt, die dann faktorisiert und nacheinander durchgeführt werden. Statt dessen wird der Transformationstensor $[\underline{T}]$, der aus der Transformationsmatrix $[\underline{A}]$ der eindimensionalen Transformation durch Bildung des Kronecker-Produktes hervorgeht, in ein Produkt von abgeleiteten Tensoren $[\underline{T}_i]$, i= 1,...,a, zerlegt. Diese Tensoren $[\underline{T}_i]$ werden als zweidimensionales Feld in den Tensor-Speichern $T_i$ abgespeichert. Zur Durchführung der Transformation werden die Eingangsdaten aus dem Originalbereich, die in einer Eingangsmatrix $[X]$ der Dimension n x n vorliegen, zeilenweise in eine Speicher S eingegeben. Man ordnet also die Zeilenvektoren der Eingangsmatrix in aufsteigender Reihenfolge in einen Eingangsvektor der Dimension $n^2$ an. Zur Durchführung der Transformation wird nun eine Matrix-Vektor-Multiplikation zwischen dem abgeleiteten Tensor $[\underline{T}_a]$, der im Speicher $T_a$ abgespeichert ist und dem Eingangsvektor durchgeführt und das Ergebnis in den Speicher S eingeschrieben. Mit dem Inhalt des Speichers S wird nun (a-1)-mal eine Matrix-Vektor-Multiplikation mit den Tensoren $[\underline{T}_i]$, i = 1,...,a-1, durchgeführt, wobei das Ergebnis der s-ten Matrix-Vektor-Multiplikation wieder in den Speicher S eingeschrieben wird und somit Faktor der (s+1)-ten Multiplikation ist. Die einzelnen Matrix-Vektor-Multiplikationen setzen sich dabei entweder nur aus Additionen oder nur aus Multiplikationen zusammen. Der nach den a Matrix-Vektor-Multiplikationen enstandene Ergebnisvektor enthält die Koeffizienten des Spektralbereichs. Da die Transformation auf Matrix-Vektor-Multiplikationen reduziert werden kann, ist es möglich, die Transformation mit zwei Teilspeichern, in denen die Eingangsdaten, die Zwischenergebnisse und das Ergebnis abwechselnd ein- und ausgegeben werden, durchzuführen. Sind die Eingangsdaten im Teilspeicher S1 des Speichers S abgespeichert, so werden diese für die erste Multiplikation ausgelesen und das Zwischenergebnis in den Teilspeicher S2 eingelesen und abgespeichert. Bei der zweiten Multiplikation wird aus Teilspeicher S2 ausgelesen und das Zwischenergebnis in Teilspeicher S1 eingelesen. Die nun nicht mehr benötigten Eingangsdaten werden überschrieben.

Da bei einer Matrix-Vektor-Multiplikation mit einer Matrix der Dimension $n^2 \times n^2$, die je Zeile oder Spalte nur ein Element $\neq 0$ enthält, maximal $n^2$ Multiplikationen und $n^2$ Vertauschungen der Vektorelemente autreten und die Tensoren mit Additionen durch Zerlegung in Tensoren mit maximal zwei relevanten Elementen je Zeile oder Spalte umgeformt werden können, ist es möglich, mit einem Speicher mit einer minimalen Anzahl von Speicherplätzen für Eingangsdaten und Zwischenergebnisse und Ergebnis auszukommen, wenn die Multiplizier- und Addiereinrichtung mehrere Additionen gleichzeitig ausführen kann und zudem selbst über Register verfügt. Wenn die additiven Tensoren Butterfly-Strukturen aufweisen, genügt es, zwei Register vorzusehen und zwei Additionen parallel auszuführen. Die relevanten Elemente der multiplikativen Tensoren befinden sich meist auf der Hauptdiagonalen, wodurch auch Vertauschungen selten notwendig sind. Der Aufwand an Speichern kann also sehr gering gehalten werden, außerdem ist auch der zeitliche Aufwand für eine solche Transformation gering.

Eine Rücktransformation ist mit dem gleichen Verfahren, jedoch mit den transponierten Tensoren möglich. Die abgeleiteten Tensoren sollten also invertierbar, d. h. umkehrbar, sein. Die Eingangswerte sind bei der Rücktransformation die Koeffizienten aus dem Spektralbereich, das nach a Matrix-Vektor-Multiplikationen mit den inversen abgeleiteten Tensoren entstandene Ergebnis enthält die Daten des Originalbereichs.

Dieses Verfahren zur Durchführung einer zweidimensionalen Spektraltransformation ist zur Reduktion der Zahl der arithmetischen Operationen geeignet, da die abgeleiteten Tensoren [$T_i$] aus Teilmatrizen der Transformationsmatrix der eindimensionalen Transformation durch Kronecker-Multiplikation gebildet werden und diese bekannten Teilmatrizen so gewählt wurden, daß sich die Zahl der arithmetischen Operationen reduziert. Eine mögliche Faktorisierung der diskreten Cosinus-Transformation, anhand derer die Erfindung näher erläutert werden soll, ist die Zerlegung nach B. G. Lee. Weitere mögliche Faktorisierungen der diskreten Cosinus-Transformation sind von W. H. Chen aus "A fast computational algorithm for the DCT", IEEE, COM-25, Nov., 1977 sowie von Z. Wang aus "On computing the discrete Fourier and Cosine transforms", ASSP-33, No. 4, Oct., 1985 bekannt.

Die Zahl der arithmetischen Operationen wird dadurch reduziert, daß für die abgeleiteten Tensoren nur zwei verschiedene Tensorstrukturen unterschieden werden können: nämlich multiplikative Tensoren, die pro Zeile und Spalte nur ein Element $\neq 0$, also eine Multiplikation aufweisen und additive Tensoren, die nur Elemente aus der Menge $\{-1,0,+1\}$ ,also nur Additionen und Subtraktionen enthalten. Gemeinsam haben beide Tensorstrukturen, daß sie spärlich besetzt sind, daß also die meisten Elemente der Tensoren Null sind. Eine Steuereinheit sorgt dafür, daß nur relevante Elemente bei der Matrix-Vektor-Multiplikation berücksichtigt werden. Eine weitere Vereinfachung tritt ein, wenn die additiven Tensoren je Zeile oder Spalte höchstens zwei relevante Elemente enthalten, da eine Matrix-Vektor-Multiplikation mit diesen Tensoren in einer Stufe ausgeführt werden kann. Die Multiplikation ist besonders einfach mit einer Einheit durchzuführen, die zwei parallele Additionen, sogenannte Butterfly-Operationen, ausführen kann. Soche Tensoren mit höchstens zwei relevanten Elementen je Zeile oder Spalte erhält man, wenn man einen additiven Tensor in sequentiell auszuführende Operationen zerlegt. Wenn man weiter versucht, die Multiplikation auf möglichst wenige Tensoren zu konzentrieren, so kann der Aufwand an Rechenoperationen weiter reduziert werden.

Die Erfindung wird nun anhand eines in den Zeichnungen dargestellten Ausführungsbeispiels näher erläutert.

Figur 1          zeigt ein schematisches Diagramm mit Funktionseinheiten. Weiter zeigen:

Figur 2a - 2c       die Lee-Matrizen der Dimension 8 x 8, wobei

$$x_n = \frac{1}{2 \cdot \cos\left(\frac{n\pi}{16}\right)} \quad ,$$

Figur 3a - 3c       die von den Lee-Matrizen abgeleiteten transponierten abgeleiteten Tensoren für die zweidimensionale Transformation,

Figur 4a - 4c       die modifizierten Lee-Matrizen, wobei

$$x_n = \frac{1}{2 \cdot \cos\left(\frac{n\,\overline{\pi}}{16}\right)} \quad ,$$

Figur 5      ein schematisches Diagramm mit zwei Teilspeichern, wobei der Inhalt beider Speicher zur Multiplikation abwechselnd ein- und ausgelesen wird,

Figur 6      ein schematisches Diagramm mit zwei Teilspeichern, wobei nur aus einem Speicher die Daten zur Multiplikation ausgelesen werden.

Das Ausführungsbeispiel geht von einer diskrekten Cosinus-Transformation für Blöcke der Größe (8 x 8) aus und verwendet eine Faktorisierung nach B. G. Lee.

Abgeleitete Tensoren $[\underline{T_i}]$ sind in Tensor-Speichern $T_i$ abgespeichert. Die abgeleiteten Tensoren $[\underline{T_i}]$ hängen wie folgt mit dem Transformationstensor $[\underline{T}]$ und den Lee-Matrizen zusammen:

Es gilt

$$[\underline{T}] = [A] \otimes [A] ,$$

wobei [A] Transformationsmatrix der eindimensionalen diskreten Cosinus-Transformation, $\otimes$ Kronecker-Produkt und Dim $[\underline{T}] = n^2 \times n^2$, hier: $8^2 \times 8^2$.

Nach B. G. Lee existiert eine Produktdarstellung der eindimensionalen Transformationsmatrix [A]

$$[A] = [P1^T] [M1^T] [M2^T] ... [M8^T] [P2^T] ,$$

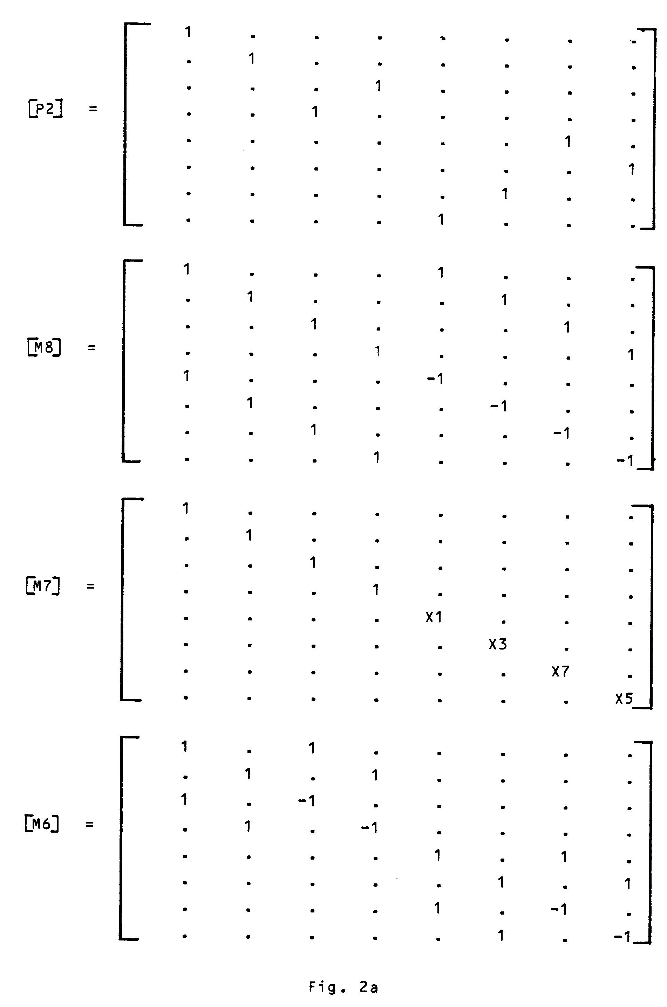

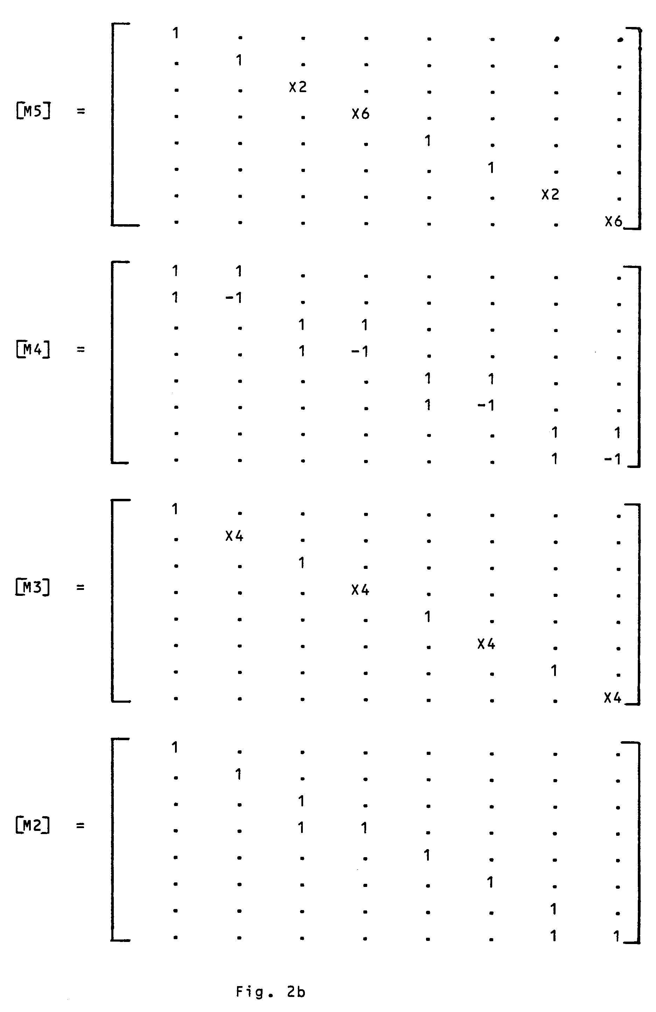

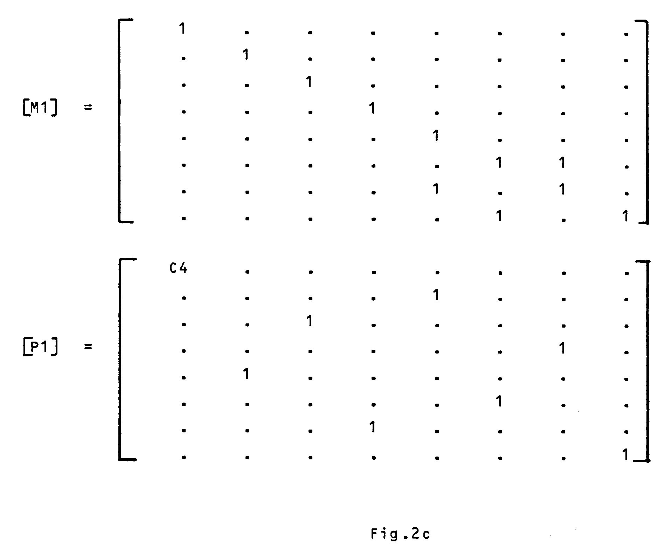

wobei $[P1^T]$, $[M1^T]$ ... $[M8^T]$ und $[P2^T]$ die transponierten Lee-Matrizen sind, die entweder pro Zeile und Spalte nur ein Element $\neq 0$ enthalten, oder nur Elemente aus der Menge $\{ -1,0,+1 \}$ und maximal zwei Elemente $\neq 0$ je Spalte oder Zeile. Die Lee-Matrizen sind in Figur 2 dargestellt.

$$[\underline{T}] = ([P1^T] [M1^T]...[M8^T] [P2^T]) \times ([P1^T] [M1^T]...[M8^T] [P2^T])$$
$$= ([P1^T] \times [P1^T]) ([M1^T] \times [M1^T]) ...$$
$$([M8^T] \times [M8^T]) ([P2^T] \times [P2^T])$$
$$= [\underline{T_1}] [\underline{T_2}] [\underline{T_3}] ... [\underline{T_{10}}]$$

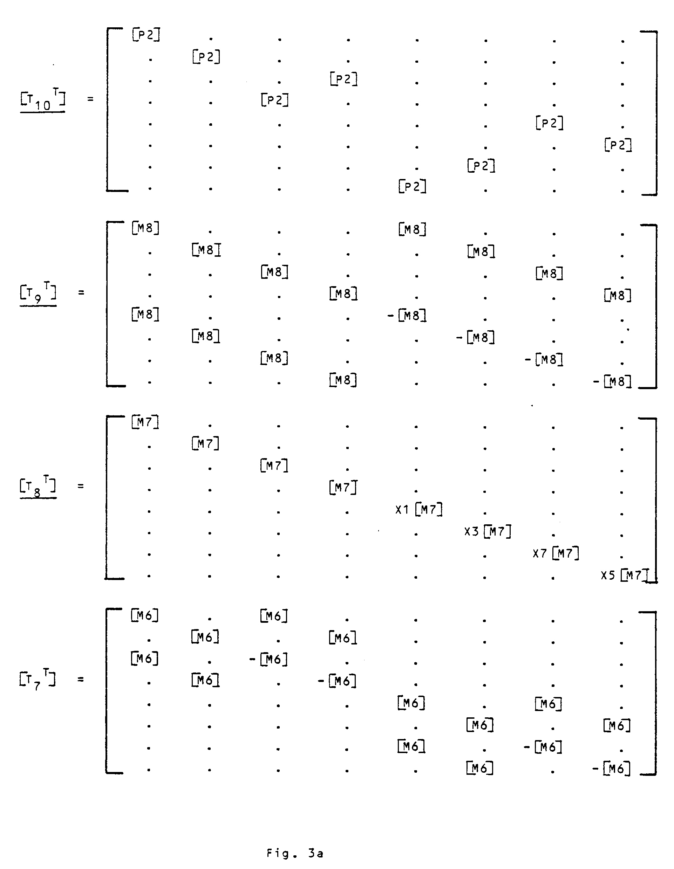

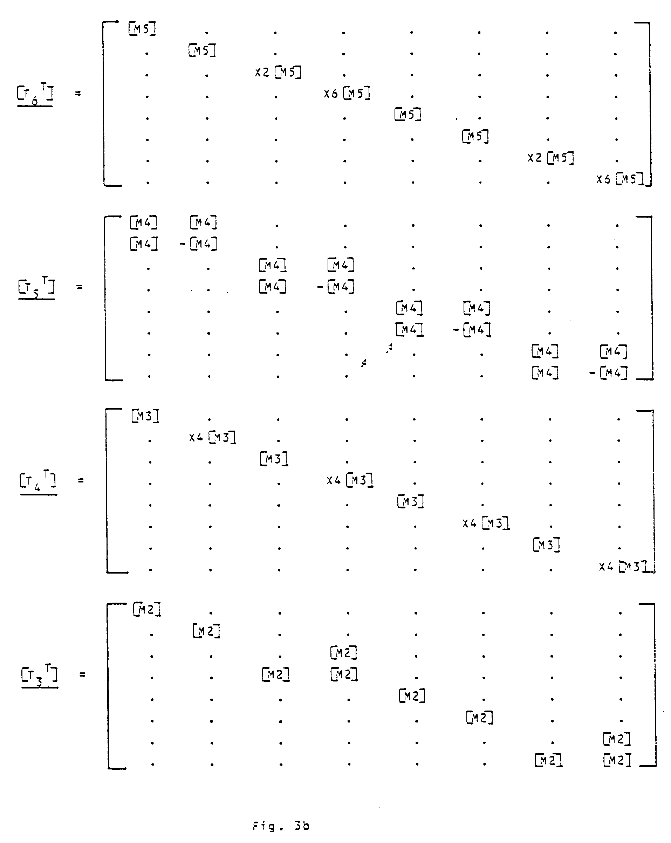

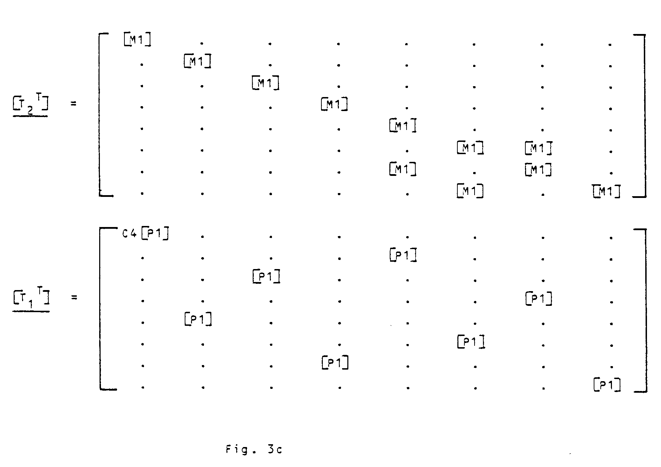

Bei den so erhaltenen abgeleiteten Tensoren, die in Figur 3 dargestellt sind, können zwei verschiedene Tensorstrukturen unterschieden werden:

Lee-Matrizen, die pro Zeile und Spalte nur ein Element $\neq 0$ haben, führen zu multiplikativen abgeleiteten Tensoren. Diese Bezeichnung wurde gewählt, weil in einer möglichen Realisierung des entsprechenden Tensors ausschließlich Multiplikationen auftreten würden.

Alle anderen Lee-Matrizen enthalten nur Koeffizienten aus der Menge $\{ -1,0,+1 \}$. Je Zeile und Spalte dieser Matrizen treten maximal zwei Elemente auf die ungleich 0 sind. Entsprechend enthalten die zugehörigen abgeleiteten Tensoren ebenfalls keine Koeffizienten, die in einer möglichen Realisierung eine Multiplikation nötig machen würden. Treten zwei oder mehr Koeffizienten $\neq 0$ in einer Zeile oder Spalte des Tensors auf, führt dies zu Additionen in der Realisierung. Daher die Bezeichnung "Additive Tensoren".

Multiplikative Tensoren: Zu den Multiplikativen Tensoren gehören $[\underline{T_1}]$, $[\underline{T_1}]$, $[\underline{T_6}]$, $[\underline{T_1}]$ und $[\underline{T_{10}}]$.

Diagonale Tensoren: Innerhalb dieser Gruppe zeichnen sich $[\underline{T_6}]$, $[\underline{T_6}]$ und $[\underline{T_1}]$ dadurch aus, daß sich alle relevanten Elemente auf der Hauptdiagonalen befinden.

Sortierungstensoren $[\underline{T_1}]$ und $[\underline{T_{10}}]$ haben, entsprechend der Funktion der Matrizen $[\underline{P_1}]$ und $[\underline{P_6}]$ im eindimensionalen Fall, die Aufgabe Ein- bzw. Ausgangsdaten bezüglich der Reihenfolge zu sortieren. $[\underline{T_1}]$ enthält außerdem die Normierung des Gleichanteils.

Additive Tensoren $[\underline{T_9}]$, $[\underline{T_1}]$, $[\underline{T_9}]$, $[\underline{T_9}]$ und $[\underline{T_9}]$ enthalten nur Additionen und Subtraktionen. Innerhalb einer Zeile treten bis zu vier relevante Elemente auf; die Durchführung der Matrix-Vektor-Multiplikation ist bei einem Tensor mit mehr als zwei relevanten Elementen nicht in einer Stufe möglich, sondern muß auf zwei Stufen verteilt werden.

Die Zerlegung eines additiven Tensors in zwei sequentiell auszuführende Operationen, die in einer Stufe durchgeführt werden, ist verhältnismäßig einfach, wie an den beiden folgenden Beispielen zu erkennen ist.

$$[T_9] = [M8^T] \otimes [M8^T]$$

$$
= \begin{bmatrix}
[M8^T] & \cdot & \cdot & \cdot & [M8^T] & \cdot & \cdot & \cdot \\
\cdot & [M8^T] & \cdot & \cdot & \cdot & [M8^T] & \cdot & \cdot \\
\cdot & \cdot & [M8^T] & \cdot & \cdot & \cdot & [M8^T] & \cdot \\
\cdot & \cdot & \cdot & [M8^T] & \cdot & \cdot & \cdot & [M8^T] \\
[M8^T] & \cdot & \cdot & \cdot -[M8^T] & \cdot & \cdot & \cdot \\
\cdot & [M8^T] & \cdot & \cdot & \cdot -[M8^T] & \cdot & \cdot \\
\cdot & \cdot & [M8^T] & \cdot & \cdot & \cdot -[M8^T] & \cdot \\
\cdot & \cdot & \cdot & [M8^T] & \cdot & \cdot & \cdot -[M8^T]
\end{bmatrix}
$$

$$
= \begin{bmatrix}
[M8^T] & \cdot & \cdot & \cdot & \cdot & \cdot & \cdot & \cdot \\
\cdot & [M8^T] & \cdot & \cdot & \cdot & \cdot & \cdot & \cdot \\
\cdot & \cdot & [M8^T] & \cdot & \cdot & \cdot & \cdot & \cdot \\
\cdot & \cdot & \cdot & [M8^T] & \cdot & \cdot & \cdot & \cdot \\
\cdot & \cdot & \cdot & \cdot & [M8^T] & \cdot & \cdot & \cdot \\
\cdot & \cdot & \cdot & \cdot & \cdot & [M8^T] & \cdot & \cdot \\
\cdot & \cdot & \cdot & \cdot & \cdot & \cdot & [M8^T] & \cdot \\
\cdot & \cdot & \cdot & \cdot & \cdot & \cdot & \cdot & [M8^T]
\end{bmatrix}
$$

$$
\cdot \begin{bmatrix}
[E] & \cdot & \cdot & \cdot & [E] & \cdot & \cdot & \cdot \\
\cdot & [E] & \cdot & \cdot & \cdot & [E] & \cdot & \cdot \\
\cdot & \cdot & [E] & \cdot & \cdot & \cdot & [E] & \cdot \\
\cdot & \cdot & \cdot & [E] & \cdot & \cdot & \cdot & [E] \\
[E] & \cdot & \cdot & \cdot & -[E] & \cdot & \cdot & \cdot \\
\cdot & [E] & \cdot & \cdot & \cdot & -[E] & \cdot & \cdot \\
\cdot & \cdot & [E] & \cdot & \cdot & \cdot & -[E] & \cdot \\
\cdot & \cdot & \cdot & [E] & \cdot & \cdot & \cdot & -[E]
\end{bmatrix}
$$

Ein weiteres Beispiel betrifft die Zerlegung des zu [M1] gehörenden Tensors:

$$[T_2] = [M1^T] \otimes [M1^T]$$

$$= \begin{bmatrix} [M1^T] & \cdot & \cdot & \cdot & \cdot & \cdot & \cdot & \cdot \\ \cdot & [M1^T] & \cdot & \cdot & \cdot & \cdot & \cdot & \cdot \\ \cdot & \cdot & [M1^T] & \cdot & \cdot & \cdot & \cdot & \cdot \\ \cdot & \cdot & \cdot & [M1^T] & \cdot & \cdot & \cdot & \cdot \\ \cdot & \cdot & \cdot & \cdot & [M1^T] & \cdot & \cdot & \cdot \\ \cdot & \cdot & \cdot & \cdot & \cdot & [M1^T] & [M1^T] & \cdot \\ \cdot & \cdot & \cdot & \cdot & [M1^T] & \cdot & [M1^T] & \cdot \\ \cdot & \cdot & \cdot & \cdot & \cdot & [M1^T] & \cdot & [M1^T] \end{bmatrix}$$

$$= \begin{bmatrix} [M1^T] & \cdot & \cdot & \cdot & \cdot & \cdot & \cdot & \cdot \\ \cdot & [M1^T] & \cdot & \cdot & \cdot & \cdot & \cdot & \cdot \\ \cdot & \cdot & [M1^T] & \cdot & \cdot & \cdot & \cdot & \cdot \\ \cdot & \cdot & \cdot & [M1^T] & \cdot & \cdot & \cdot & \cdot \\ \cdot & \cdot & \cdot & \cdot & [M1^T] & \cdot & \cdot & \cdot \\ \cdot & \cdot & \cdot & \cdot & \cdot & [M1^T] & \cdot & \cdot \\ \cdot & \cdot & \cdot & \cdot & \cdot & \cdot & [M1^T] & \cdot \\ \cdot & \cdot & \cdot & \cdot & \cdot & \cdot & \cdot & [M1^T] \end{bmatrix}$$

$$\cdot \begin{bmatrix} [E] & \cdot & \cdot & \cdot & \cdot & \cdot & \cdot & \cdot \\ \cdot & [E] & \cdot & \cdot & \cdot & \cdot & \cdot & \cdot \\ \cdot & \cdot & [E] & \cdot & \cdot & \cdot & \cdot & \cdot \\ \cdot & \cdot & \cdot & [E] & \cdot & \cdot & \cdot & \cdot \\ \cdot & \cdot & \cdot & \cdot & [E] & \cdot & \cdot & \cdot \\ \cdot & \cdot & \cdot & \cdot & \cdot & [E] & [E] & \cdot \\ \cdot & \cdot & \cdot & \cdot & [E] & \cdot & [E] & \cdot \\ \cdot & \cdot & \cdot & \cdot & \cdot & [E] & \cdot & [E] \end{bmatrix}$$

In diesen Beispielen steht "[E]" für die Einheitsmatrix der Dimension (8 x 8) und "." für eine Nullmatrix der Dimension (8 x 8). In den Tensoren, die bei der Zerlegung entstehen, treten höchstens noch zwei relevante Elemente je Zeile oder Spalte auf. In diesem Fall ist die einstufige Realisierung der Matrix möglich. Die einstufige Realisierbarkeit ermöglicht auf einfache Weise den vorteilhaften Einsatz eines "pipelining"-Konzeptes. Ein solches Konzept sieht vor, daß nach der s-ten (s = 1, ... , a-1) Matrix-Vektor-Multiplikation des n-ten Satzes von zu transformierenden Daten mit dem abgeleiteten Tensor $[T_{a+1-s}]$ der (n + 1)-te Satz von zu transformierenden Daten mit dem abgeleiteten Tensor $[T_{a+1-s}]$ multipliziert wird. Dies geschieht während der (s + 1)-ten Multiplikation mit dem n-ten Datensatz und dem abgeleiteten Tensor $[T_{a-s}]$.

Es werden also mehrere Sätze von zu transformierenden Daten zur gleichen Zeit verarbeitet. Das heißt, daß die Verarbeitung des (n + 1)-ten Datensatzes mit den abgeleiteten Tensoren $[T_i]$, i = 1, ... , a, nicht erst beginnt, wenn die Verarbeitung des n-ten Datensatzes abgeschlossen ist.

Die Beziehung zwischen der Zahl der Multiplikationen in einer Matrix ($n_M$) und der Zahl der Multiplikationen im zugehörigen Tensor ($n_T$) kann durch die Gleichung

$$n_T = -n_M^2 + 16 \cdot n_M$$

beschrieben werden (für die (8 x 8)-DCT). Der Zusammenhang zwischen $n_M$ und $n_T$ entspricht der Gleichung einer unten geöffneten Parabel. Die Parabel hat ihren Scheitel an der Stelle $n_m = 8$. Unterhalb dieser Marke nimmt die Steigung der Kurve mit steigendem $n_M$ ab.

Verlagert man beispielsweise zwei Multiplikationen der eindimensionalen Transformation von [M7] nach [M5], so daß in [M7] noch zwei und in [M5] sechs Multiplikationen enthalten sind, dann enthalten die entsprechenden Tensoren 28 ([$T_8$]) bzw. 60 ([$T_6$]) Multiplikationen. In der Summe konnte die in beiden Tensoren enthaltene Zahl an Multiplikationen bei diesem Beispiel von 96 auf 88 reduziert werden.

Mit diesen Eigenschaften läßt sich folgende Strategie zur weiteren Reduktion der Zahl der Multiplikationen bei der zweidimensionalen Transformation aufstellen:
- Reduzierung der Zahl der Multiplikationen bei der eindimensionalen Transformation
- Konzentration der bei der eindimensionalen Transformation benötigten Multiplikationen auf möglichst wenig Matrizen.

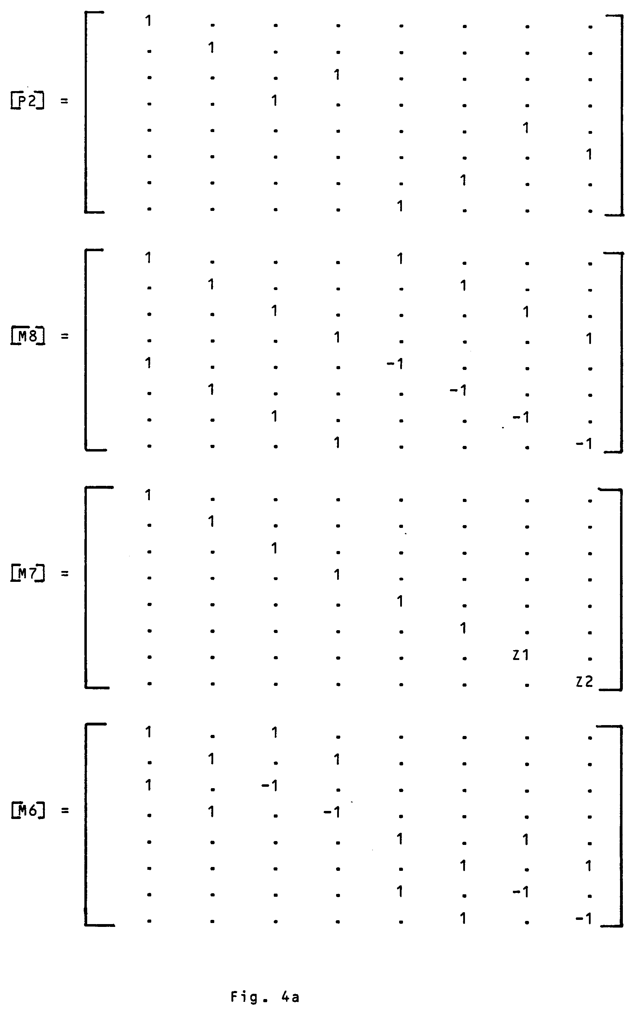

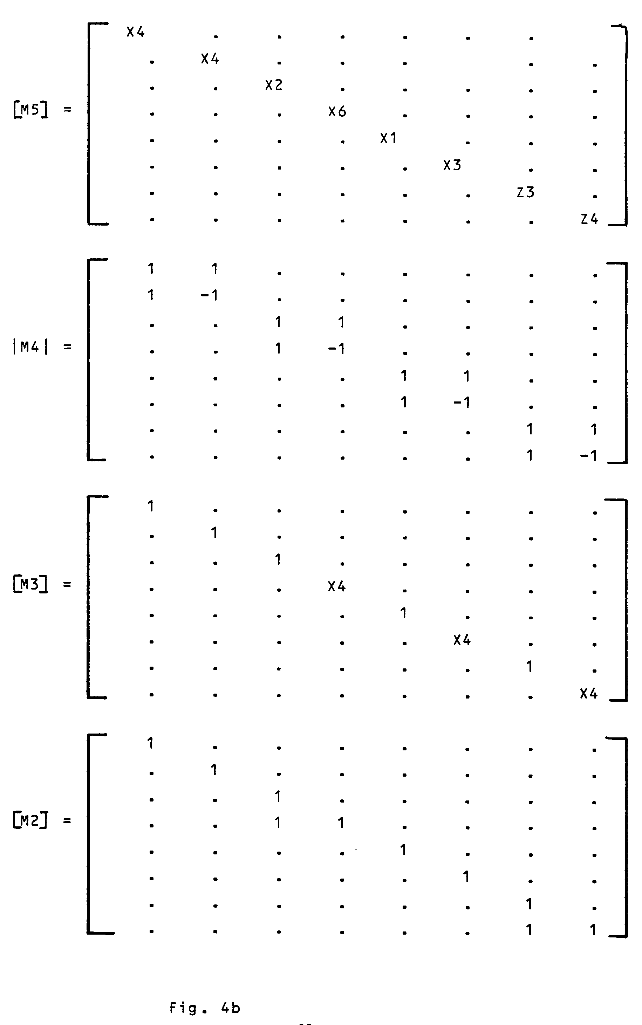

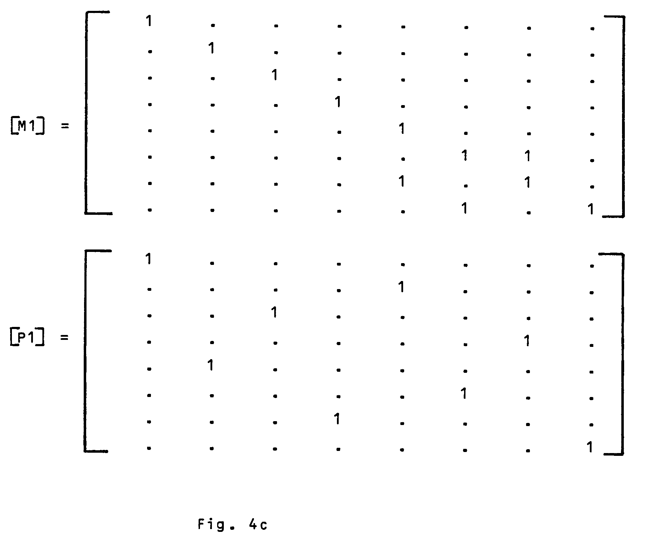

Der zweite Punkt dieser Strategie führte zu einer Modifikation der Faktorisierung nach Lee. Die entsprechenden Teilmatrizen sind in Figur 4 zusammengestellt.

In der modifizierten Faktorisierung treten die folgenden vier neuen Faktoren auf:

$$Z1 = \frac{\cos\left(\frac{\pi}{16}\right)}{\cos\left(\frac{7\pi}{16}\right)}$$

$$Z2 = \frac{\cos\left(\frac{3\pi}{16}\right)}{\cos\left(\frac{5\pi}{16}\right)}$$

$$Z3 = \frac{1}{4 \cdot \cos\left(\frac{\pi}{16}\right) \cdot \cos\left(\frac{6\pi}{16}\right)}$$

$$Z4 = \frac{1}{4 \cdot \cos\left(\frac{3\pi}{16}\right) \cdot \cos\left(\frac{6\pi}{16}\right)}$$

Die Transformation der Eingangswerte [X] erfolgt nach der folgenden Gleichung:

$$[Y] = [T_1][T_2] \dots [T_{a-1}][T_a][X],$$

wobei [Y] die Ergebniswerte des Spektralbereichs enthält.

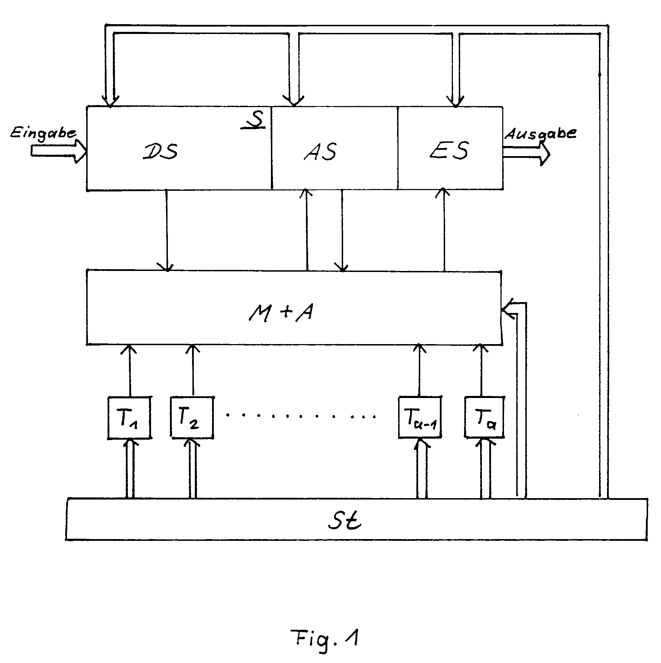

Die Eingangswerte [X] werden dazu wie in Figur 1 dargestellt zeilenweise in einen Datenspeicher DS eingegeben. Ein Eingangsvektor mit 64 Komponenten wird abgespeichert. Dieser wird dann in einer Mulitplizier- und Addiereinrichtung M + A mit dem Tensor [$T_a$] multipliziert. Eine Steuereinrichtung St steuert das Auslesen der Speicher DS und $T_1 \dots T_a$ und steuert die Multiplizier- und Addiereinrichtung M + A derart, daß nur die relevanten Elemente $\neq 0$ des Tensors bei der Matrix-Vektor-Multiplikation berücksichtigt werden. Das Ergebnis der Multiplikation wird durch die Steuereinrichtung gesteuert in einen Arbeitsspeicher AS eingelesen. Alle weiteren Matrix-Vektor-Multiplikationen laufen derart ab, daß der Vektor aus dem Arbeitsspeicher AS mit einem der Tensoren $T_i$, i = 1,..., a-1 in der Multiplizier- und Addiereinrichtung M + A multipliziert wird, und das Ergebnis in den Arbeitsspeicher AS eingeschrieben wird. Die Tensoren werden nach absteigender Reihenfolge des Indexes auf die Vektoren angewandt. Auch dies wird von der Steuereinheit gesteuert. Das Ergebnis der a-ten Matrix-Vektor-Multiplikation enthält die Koeffizienten des Spektralbereichs und wird in einen Endspeicher ES eingelesen. So wie extern Daten in den Datenspeicher DS eingelesen werden können, ist es möglich, Daten aus dem Endspeicher ES auf externe Mittel auszulesen. Die Speicher DS, AS und ES können unterschiedlich realisiert sein, entweder als unterschiedliche Teilspeicher mit je $n^2$ verschiedenen Speicherplätzen eines großen übergeordneten Speichers S oder als voneinander unabhängige Speicher mit je $n^2$ Speicherplätzen. Eine Realisierung mit nur einem Speicher mit Speicherkapazität für $n^2$ Elemente ist nur dann möglich, wenn in der Multiplizier- und Addiereinheit mehrere Operationen gleichzeitig ausgeführt und die Ergebnisse kurzzeitig in Registern der Multiplizier- und Addiereinrichtung gespeichert werden können.

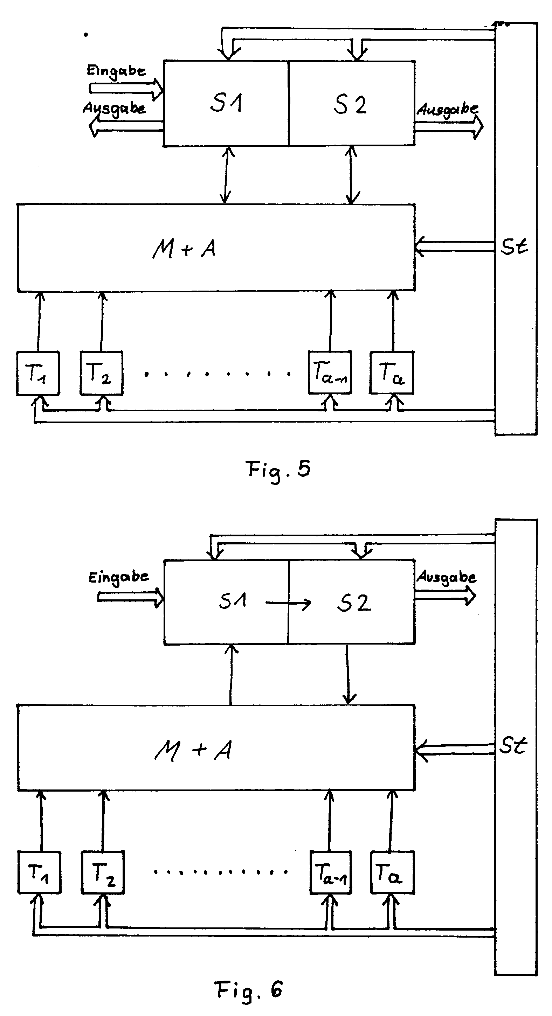

In den Figuren 5 und 6 sind weitere Möglichkeiten einer Anordnungg zur Durchführung des erfindungsgemäßen Verfahrens dargestellt. Sie unterscheiden sich voneinander und von dem in Figur 1 dargestellten durch die unterschiedliche Abspeicherung der Daten und Zwischenergebnisse. Während im in Figur 5 dargestellten Fall das Ergebnis einer Matrix-Vektor-Multiplikation abwechselnd in zwei Speicher S1 und S2 eingeschrieben wird und diese auch abwechselnd ausgelesen werden, wird im in Figur 6 dargestellten Fall immer in einen Speicher S1 eingeschrieben, die Daten werden dann vom Speicher S1 in einen Speicher S2 geschoben und von dort ausgelesen. Die Vorteile des in Figur 5 Dargestellten sind insbesondere in einer sehr einfachen Realisierung zu sehen, während bei dem in Figur 6 Dargestellten die Speicher S1 und S2 eine einfach Struktur aufweisen können. Die weiteren Elemente entsprechen denen aus Figur 1. Auch die Steuerung der Multiplizier- und Addiereinrichtung M + A erfolgt in ähnlicher Weise. Es ist jedoch nicht notwendig, daß die Muliplizier- und Addiereinrichtung M + A zusätzliche Register aufweist oder Operationen parallel durchführen kann, da die Faktoren der Multiplikation nicht gleich wieder mit dem Ergebnis der Multiplikation überschrieben werden.

Auch die Rücktransformation kann anhand der in den Figuren 1, 5 und 6 dargestellten Diagramme erläutert werden. In den Tensor-Speichern sind die inversen abgeleiteten Tensoren $[T_i^{-1}]$, i = 1, ... , a, abgespeichert.

Die Eingangswerte sind Koeffizienten des Spektralbereichs, die Ausgangswerte Daten aus dem Originalbereich. Das Verfahren läuft analog zu dem der "Hin"-Transformation, das oben bereits beschrieben wurde, ab.

Neben der Möglichkeit, die Tensoren als Elemente eines zweidimensionalen Array abzuspeichern, ist es auch möglich, nur die relevanten Elemente der abgeleiteten Tensoren abzuspeichern. Dies erweist sich aufgrund der Speicherersparnis als besonders vorteilhaft.

Eine weitere Möglichkeit besteht darin, die relevanten Elemente der abgeleiteten Tensoren in einer Zustandsmaschine zu implementieren. Die Steuerung ist dann als Zustandsmaschine ausgelegt, die zyklisch Zustandsvektoren verarbeitet. Die Zustandsvektoren enthalten Steuersignale für die Multiplizier- und Addiereinheit, die Addressierung der Speicher und die relevanten Elemente der abgeleiteten Tensoren. Statt der Elemente der Tensoren können die Zustandsvektoren auch eine Addressierung der Tensorspeicher enthalten.

Die oben beschriebenen Möglichkeiten sind auch bei der Rücktransformation realisierbar.

Eine weitere Möglichkeit, die Transformation oder Rücktransformation durchzuführen ergibt sich daraus, daß es vom arithmetischen Aufwand als gleichwertig zu betrachten ist, ob eine Matrix-Vektor-Multiplikation mit einem additiven abgeleiteten Tensor $[T_i]$ oder inversen Tensor $[T_i^{-1}]$ oder eine Matrix-Matrix-Multiplikation mit den Matrizen $[M_i]$, wobei $[T_i] = [M_i^T] \otimes [M_i^T]$ durchgeführt wird.

Entsprechend der eindimensionalen Transformation wird auf zu transformierende Werte [X'] die spärlich besetzte Matrix $[M_i]$ wie folgt angewandt:

$$[X''] = [M_i] \cdot [X'] [M_i^T]$$
$$= [M_i] \cdot ([M_i] \cdot [X'^T])^T$$

Es sind nur Butterfly-Operationen durchzuführen.

Faßt man diesen Vorgang mit der Anwendung der Matrix-Vektor-Multiplikationen für multiplikative abgeleitete oder abgeleitete inverse Tensoren zusammen, so erhält man ein besonders einfach zu realisierendes Verfahren zur Durchführung einer zweidimensionalen Transformation.

Zur Realisation sollte eine Steuerung vorgesehen sein, in die die Struktur des Verfahrens implementiert ist.

Eine mögliche Anwendung des beschriebenen Verfahrens besteht darin, daß die durch punktweise Ablastung eines Bildes gewonnenen Bildsignale in einer Transformationsanordnung mit dem erfindungsgemäßen Verfahren transformiert werden. Die gewonnenen Koeffizienten des Spektralbereichs können anschließend quantisiert und übertragen werden. Die dekodierten Werte können dann in einer Rücktransformationsanordnung, die ebenfalls nach dem erfindungsgemäßen Verfahren arbeitet, in Bildsignale zurückverwandelt werden, die den urspünglichen Bildsignalen weitgehend entsprechen. Um eine schnellere Verarbeitung der großen anfallenden Datenmenge bei Bilddaten zu erreichen ist es sinnvoll, das Bild in Teilbereiche zu unterteilen und die Transformation der einzelnen Teilbereiche parallel nach dem erfindungsgemäßen Verfahren durchzuführen.

**Patentansprüche**

1. Verfahren zur Durchführung einer zweidimensionalen Spektraltransformation, wobei eine Matrix mit zu transformierenden Daten im Originalbereich vorliegt,

dadurch gekennzeichnet,

daß vom Transformationstensor $\underline{[T]}$ der zweidimensionalen Transformation abgeleitete Tensoren $[T_i]$, i = 1, ..., a, verwendet werden,

wobei der Transformationstensor $\underline{[T]}$ aus der eindimensionalen Transformationsmatrix [ A ] durch Bildung des Kronecker-Produktes der Transformationsmatrix [ A ] gebildet wird

$$\underline{[\,T\,]} = [\,A\,] \otimes [\,A\,],$$

wobei Dim $\underline{[\,T\,]}$ = n² x n², wenn Dim [ A ] = n x n, und

wobei der Transformationstensor $\underline{[\,T\,]}$ in ein Produkt von abgeleiteten Tensoren $\underline{[T_i]}$, i = 1, ..., a zerlegt wird,

wobei die Tensoren [ T_i ] entweder je Zeile oder Spalte nur ein Element ungleich Null oder nur Elemente der Menge { -1, 0, +1 } enthalten und die abgeleiteten Tensoren $\underline{[\,T_i]}$ invertierbar sind,

daß die zu transformierenden Daten als Elemente eines Vektors abgespeichert werden,

daß mit einem abgespeicherten Vektor in einer Multiplizierund Addiereinrichtung (M + A) eine Matrix-Vektor-Multiplikation mit einem der abgeleiteten Tensoren $\underline{[\,T_i]}$ durchgeführt wird,

daß das Ergebnis der s-ten Matrix-Vektor-Multiplikation s = 1, ..., a-1 mit dem abgeleiteten Tensor $\underline{[\,T_{a+1-s}]}$ abgespeichert wird und Faktor der (s+1)-ten Matrix-Vektor-Multiplikation ist,

daß die erste Matrix-Vektor-Multiplikation mit dem abgespeicherten Vektor mit den Daten des Originalbereichs durchgeführt wird und das Ergebnis der a-ten Matrix-Vektor-Multiplikation mit dem abgeleiteten Tensor $\underline{[\,T_1]}$ die Spektralkoeffizienten in Form eines Vektors enthält und daß der Datenfluß und die Multiplizier- und Addiereinrichtung (M + A) mit einer Steuereinheit (St) gesteuert werden.

2. Verfahren zur Durchführung einer zweidimensionalen Spektralrücktransformation, wobei eine Matrix mit rückzutransformierenden Daten im Spektralbereich vorliegt,

dadurch gekennzeichnet,

daß vom Rücktransformationstensor $[\,T^{-1}\,]$ der zweidimensionalen Rücktransformation abgeleitete Tensoren $[\,T_i^{-1}\,]$, i = 1, ..., a, verwendet werden,

wobei der Rücktransformationstensor $[\,T^{-1}\,]$ aus der eindimensionalen Rücktransformationsmatrix [ A^{-1} ] durch Bildung des Kronecker-Produktes der Rücktransfomationsmatrix [ A^{-1} ] gebildet wird

$$\underline{[\,T^{-1}\,]} = [\,A^{-1}\,] \otimes [A^{-1}\,],$$

wobei Dim $\underline{[\,T^{-1}\,]}$ = n² x n², wenn Dim [ A^{-1} ] = n x n, und

wobei der Rücktransformationstensor $\underline{[\,T^{-1}\,]}$ in ein Produkt von abgeleiteten Tensoren $\underline{[\,T_i^{-1}\,]}$, i = 1, ..., a zerlegt wird,

wobei die inversen abgeleiteten Tensoren $[\,T_i^{-1}\,]$ entweder je Zeile oder Spalte nur ein Element ungleich Null enthalten oder nur Elemente der Menge { -1,0,+1 } enthalten und die abgeleiteten inversen Tensoren $[\,T_i^{-1}\,]$ invertierbar sind,

daß die rückzutransformierenden Koeffizienten als Elemente eines Vektors abgespeichert werden,

daß mit einem abgespeicherten Vektor in einer Multiplizier- und Addiereinrichtung (M + A) eine Matrix-Vektor-Multiplikation mit einem der abgeleiteten Tensoren $[\,T_i^{-1}\,]$ durchgeführt wird,

daß das Ergebnis der s-ten Matrix-Vektor-Multiplikation s = 1, ..., a-1 mit dem abgeleiteten inversen Tensor $[\,T_{a+1-s}^{-1}\,]$ abgespeichert wird und Faktor der (s+1)-ten Matrix-Vektor-Multiplikation ist,

daß die erste Matrix-Vektor-Multiplikation mit dem abgespeicherten Vektor mit den Koeffizienten des Spektralbereichs durchgeführt wird und das Ergebnis der a-ten Matrix-Vektor-Multiplikation mit dem abgeleiteten inversen Tensor $[\,T_1^{-1}\,]$ die Daten des Originalbereichs in Form eines Vektors enthält und daß der Datenfluß und die Multiplizier- und Addiereinrichtung (M + A) mit einer Steuereinheit (St) gesteuert werden.

3. Verfahren zur Durchführung einer zweidimensionalen Spektraltransformation, wobei eine Matrix mit zu transformierenden Daten im Originalbereich vorliegt,

dadurch gekennzeichnet,

daß vom Transformationstensor $\underline{[\,T\,]}$ der zweidimensionalen Transformation abgeleitete Tensoren $\underline{[\,T_i\,]}$, i = 1, ..., a , verwendet werden,

wobei der Transformationstensor $\underline{[\,T\,]}$ aus der eindimensionalen Transformationsmatrix [ A ] durch Bildung des Kronecker-Produktes der Transformationsmatrix [ A ] gebildet wird

$$[\,T\,] = [\,A\,] \otimes [\,A\,],$$

wobei Dim $[\underline{T}]$ = n² x n², wenn Dim [ A ] = n x n, und

wobei der Transformationstensor $[\underline{T}]$ in ein Produkt von abgeleiteten Tensoren $[\underline{T_i}]$, i = 1, ..., a zerlegt wird,

wobei die Tensoren $[\underline{T_i}]$ entweder je Zeile oder Spalte nur ein Element ungleich Null oder nur Elemente der Menge { -1, 0, +1 } enthalten und die abgeleiteten Tensoren $[\underline{T_i}]$ invertierbar sind,

daß die zu transformierenden Daten als Elemente eines Datensatzes abgespeichert werden,

daß mit einem abgespeicherten Datensatz in einer Multiplizier- und Addiereinrichtung (M + A) eine Multiplikation mit einem der abgeleiteten Tensoren $[\underline{T_i}]$ durchgeführt wird, wobei mit den abgeleiteten Tensoren, die nur Elemente der Menge {-1,0,+1} enthalten, eine Matrix-Matrix-Multiplikation durchgeführt wird, indem der Tensor in zwei Matrizen zerlegt wird, die auf den Datensatz angewandt werden und wobei mit den Tensoren, die je Zeile oder Spalte nur ein Element ungleich Null enthalten, eine Matrix-Vektor-Multiplikation mit dem abgespeicherten Datensatz durchgeführt wird,

daß das Ergebnis der s-ten Multiplikation s = 1, ..., a-1 mit dem abgeleiteten Tensor $[\underline{T_{a+1-s}}]$ abgespeichert wird und Faktor der (s+1)-ten Multiplikation ist,

daß die erste Multiplikation mit dem abgespeicherten Vektor mit den Daten des Originalbereichs durchgeführt wird und das Ergebnis der a-ten Multiplikation mit dem abgeleiteten Tensor $[\underline{T_1}]$ die Spektralkoeffizienten in Form eines Vektor enthält und

daß der Datenfluß und die Multiplizier- und Addiereinrichtung (M + A) mit einer Steuereinheit (St) gesteuert werden.

4. Verfahren zur Durchführung einer zweidimensionalen Spektralrücktransformation, wobei eine Matrix mit rückzutransformierenden Koeffizienten im Spektralbereich vorliegt, dadurch gekennzeichnet,

daß vom Rücktransformationstensor $[\underline{T^{-1}}]$ der zweidimensionalen Rücktransformation abgeleitete inverse Tensoren $[\underline{T_i^{-1}}]$, i = 1, ..., a, verwendet werden,

wobei der Rücktransformationstensor $[\underline{T^{-1}}]$ aus der eindimensionalen Rücktransformationsmatrix $[\underline{A^{-1}}]$ durch Bildung des Kronecker-Produktes der Rücktransformationsmatrix [ A⁻¹ ] gebildet wird

$$[\,T^{-1}\,] = [\,A^{-1}\,] \otimes [\,A^{-1}\,],$$

wobei Dim $[\underline{T^{-1}}]$ = n² x n², wenn Dim $[\overline{A^{-1}}]$ = n x n, und

wobei der Rücktransformationstensor $[\underline{T^{-1}}]$ in ein Produkt von abgeleiteten Tensoren $[\underline{T_i^{-1}}]$, i = 1, ..., a zerlegt wird,

wobei die inversen abgeleiteten Tensoren $[\underline{T_i^{-1}}]$ entweder je Zeile oder Spalte

nur ein Element ungleich Null enthalten oder nur Elemente der Menge { -1,0,+1 } enthalten und die abgeleiteten inversen Tensoren $[\underline{T_i^{-1}}]$ invertierbar sind,

daß die rückzutransformierenden Koeffizienten als Elemente eines Datensatzes abgespeichert werden,

daß mit einem abgespeicherten Datensatz in einer Multiplizier- und Addiereinrichtung (M + A) eine Multiplikation mit einem der abgeleiteten Tensoren $[\underline{T_i^{-1}}]$ durchgeführt wird, wobei mit den abgeleiteten inversen Tensoren, die nur Elemente der Menge { -1,0,+1 } enthalten, eine Matrix-Matrix-Multiplikation durchgeführt wird, indem der Tensor in zwei Matrizen zerlegt wird, die auf den Datensatz angewandt werden und wobei mit den Tensoren, die je Zeile oder Spalte nur ein Element ungleich Null enthalten, eine Matrix-Vektor-Multiplikation mit dem abgespeicherten Datensatz durchgeführt wird,

daß das Ergebnis der s-ten Multiplikation s = 1, ..., a-1 mit dem abgeleiteten inversen Tensor $[\underline{T_{a+1-s}^{-1}}]$ abgespeichert wird und Faktor der (s+1)-ten Multiplikation ist,

daß die erste Multiplikation mit dem abgespeicherten Vektor mit den Koeffizienten des Spektralbereichs durchgeführt wird und das Ergebnis der a-ten Multiplikation mit dem abgeleiteten inversen Tensor $[\underline{T_1^{-1}}]$ die Daten des Originalbereichs in Form eines Vektors enthält und daß der Datenfluß und die Multiplizier- und Addiereinrichtung (M + A) mit einer Steuereinheit (St) gesteuert werden.

5. Verfahren zur Durchführung einer zweidimensionalen Spektral- oder Spektralrücktransformation nach einem der Ansprüche 1 bis 4, dadurch gekennzeichnet, daß abgeleitete Tensoren $[\underline{T_i}]$, i = 1,...,a, oder abgeleitete inverse Tensoren $[\underline{T^{-1}}]$, i = 1,...,a, verwendet werden, die in Tensor-Speichern (T₁,...,Tₐ) als zweidimensionale Felder abgespeichert werden.

6. Verfahren zur Durchführung einer zweidimensionalen Spektral- oder Spektralrücktransformation nach einem der Ansprüche 1 bis 4, dadurch gekennzeichnet, daß nur die relevanten Elemente der abgeleiteten Tensoren $[\underline{T_i}]$, i = 1,...,a, oder der abgeleiteten inversen Tensoren $[\underline{T_i^{-1}}]$, i = 1,...,a, in Speichern abgespeichert werden.

7. Verfahren zur Durchführung einer zweidimensionalen Spektral- oder Spektralrücktransformation nach einem der Ansprüche 1 bis 4, dadurch gekennzeichnet, daß die zu transformierenden Daten oder die rückzutransformierenden Koeffizienten und die Ergebnisse der Matrix-Vektor-Multiplikation in einen Speicher (S) eingeschrieben werden.

8. Verfahren zur Durchführung einer zweidimensionalen Spektral- oder Spektralrücktransformation nach einem der Ansprüche 1 bis 4, dadurch gekennzeichnet, daß die zu transformierenden Daten oder die rückzutransformierenden Koeffizienten in einen ersten Speicher eingeschrieben werden und daß die Ergebnisse der Matrix-Vektor-Multiplikation in weitere Speicher eingeschrieben werden.

9. Verfahren zur Durchführung einer zweidimensionalen Spektral- oder Spektralrücktransformation nach einem der Ansprüche 1 bis 4, dadurch gekennzeichnet, daß die zu transformierenden Daten oder die rückzutransformierenden Koeffizienten in einen ersten Teilspeicher (S1) eingeschrieben werden, daß das Ergebnis der ersten Matrix-Vektor-Multiplikation in einen zweiten Teilspeicher (S2) eingeschrieben wird, daß die Ergebnisse der weiteren Matrix-Vektor-Multiplikation abwechselnd in einen der beiden Teilspeicher (S1, S2) eingeschrieben werden, derart, daß die Matrix-Vektor-Multiplikation mit dem Inhalt des einen Teilspeichers durchgeführt wird, und das Ergebnis dieser Multiplikation in den anderen Teilspeicher eingeschrieben wird.

10. Verfahren zur Durchführung einer zweidimensionalen Spektral- oder Spektralrücktransformation nach Anspruch 7, dadurch gekennzeichnet, daß mit der Multiplizier- und Addiereinrichtung (M + A) mehrere parallele Additionen durchgeführt werden, und die Zwischenergebnisse in der Multiplizier- und Addiereinrichtung (M + A) in Registern (R) festgehalten werden und daß die zu transformierenden Daten oder die rückzutransformierenden Koeffizienten und die Ergebnisse der Matrix-Vektor-Multiplikationen immer auf den gleichen Speicherplätzen des Speichers (S) abgespeichert werden.

11. Verfahren zur Durchführung einer zweidimensionalen Spektraltransformation nach Anspruch 1, dadurch gekennzeichnet, daß die zu transformierenden Daten und die Ergebnisse der Matrix-Vektor-Multiplikationen jeweils in einen ersten Teilspeicher (S1) eingeschrieben werden und nach jeder Multiplikation in einen zweiten Teilspeicher (S2) geschoben werden, von wo sie zur nächsten Multiplikation ausgelesen werden.

12. Verfahren zur Durchführung einer zweidimensionalen Spektral- oder Spektralrücktransformation nach einem der Anspüche 1 bis 11 dadurch gekennzeichnet, daß die Multiplizier- und Addiereinrichtung (M + A) durch die Steuereinheit derart gesteuert wird, daß nur Multiplikationen und Additionen mit relevanten Tensor-Elementen durchgeführt werden.

13. Verfahren zur Durchführung einer zweidimensionalen Spektral- oder Spektralrücktransformation nach Anspruch 10, dadurch gekennzeichnet, daß die Steuereinheit wie eine Zustandsmaschine arbeitet, die Zustandsvektoren zyklisch verarbeitet, wobei die Zustandsvektoren Steuersignale für die Multiplizier- und Addiereinheit, die Adressierung der Speicher und die Adressierung der Tensorspeicher enthalten.

14. Verfahren zur Durchführung einer zweidimensionalen Spektral- oder Spektralrücktransformation nach Anspruch 10, dadurch gekennzeichnet, daß die die Steuereinheit wie eine Zustandsmaschine arbeitet, die Zustandsvektoren zyklisch verarbeitet, wobei die Zustandsvektoren Steuersignale für die Multiplizier- und Addiereinheit, die Adressierung der Speicher und die relevanten Elemente der abgeleiteten Tensoren oder der abgeleiteten inversen Tensoren enthalten.

15. Anwendung des Verfahrens zur Durchführung einer zweidimensionalen Spektraltransformation oder Spektralrücktransformation nach einem der Ansprüche 1 bis 12, für durch eine punktweise Abtastung eines Bildes gewonnene Bildsignale, die zur Reduktion der Datenmenge vom Originalbereich in den Spektralbereich transformiert werden.

## Claims

1. A method for performing a two-dimensional spectral transformation, wherein a matrix with data to be transformed is present in the original area,
   characterized in that
   tensors $[T_i]$, i = 1, ..., a, derived from the transformation tensor $[T]$ of the two-dimensional transformation, are used,

wherein the transformation tensor $[\underline{T}]$ is formed from the unidimensional transformation matrix $[A]$ by forming the Kronecker product of the transformation matrix $[A]$,

$$[\underline{T}] = [A] \otimes [A],$$

wherein Dim $[\underline{T}] = n^2 \times n^2$, if Dim $[A] = n \times n$, and

wherein the transformation tensor $[\underline{T}]$ is reduced to a product of derived tensors $[\underline{T_i}]$, i = 1, ..., a,

wherein the tensors $[\underline{T_i}]$ either contain only an element unequal to zero per line or column or only elements of the amount {-1, 0, +1} and the derived tensors $[\underline{T_i}]$ are invertible,

that the data to be transformed are stored as elements of a vector,

that a matrix-vector-multiplication with one of the derived tensors $[\underline{T_i}]$ is performed by means of a stored vector in a multiplication and adding device (M + A),

that the result of the s-th matrix-vector-multiplication s = 1, ..., a-1 with the derived tensor $[\underline{T_{a+1-s}}]$ is stored and is the factor of the (s+1)-th matrix-vector-multiplication,

that the first matrix-vector-multiplication with the stored vector is performed with the data of the original area and the result of the a-th matrix-vector-multiplication with the derived tensor $[\underline{T_1}]$ contains the spectral coefficients in the form of a vector and that the data flow and the multiplication and adding device (M + A) are controlled by means of a control unit (St).

2.  A method for performing a two-dimensional spectral inverse transformation, wherein a matrix with data to be inversely transformed is present in the spectral range,

characterized in that

tensors $[\underline{T_i^{-1}}]$, i = 1, ..., a, derived from the inverse transformation tensor $[\underline{T^{-1}}]$ are used,

wherein the inverse transformation tensor $[\underline{T^{-1}}]$ is formed from the unidimensional inverse transformation matrix $[A^{-1}]$ by forming the Kronecker product of the inverse transformation matrix $[A^{-1}]$,

$$[\underline{T^{-1}}] = [A^{-1}] \otimes [A^{-1}],$$

wherein Dim $[\underline{T^{-1}}] = n^2 \times n^2$, if Dim $[A^{-1}] = n \times n$, and

wherein the inverse transformation tensor $[\underline{T^{-1}}]$ is reduced to a product of derived tensors $[\underline{T_i^{-1}}]$, i = 1, ..., a,

wherein the derived inverse tensors $[\underline{T_i^{-1}}]$ either contain only an element unequal to zero per line or column, or only elements of the amounts {-1, 0, +1} and the derived inverse tensors $[\underline{T_i^{-1}}]$ can be inverted,

that the coefficients to be inversely transformed are stored as elements of a vector,

that a matrix-vector-multiplication with one of the derived tensors $[\underline{T_i^{-1}}]$ is performed in a multiplication and adding device (M + A),

that the result of the s-th matrix-vector-multiplication s = 1, ..., a-1 is stored with the derived inverse tensor $[\underline{T_{a+1-s}^{-1}}]$ and is the factor of the (s+l)-th matrix-vector-multiplication,

that the first matrix-vector-multiplication with the stored vector is performed with the coefficient of the spectral area and the result of the a-th matrix-vector-multiplication with the derived inverse tensor $[\underline{T_1^{-1}}]$ contains the data of the original area in the form of a vector and

that the data flow and the multiplication and adding device (M + A) are controlled by means of a control unit (St).

3.  A method for performing a two-dimensional spectral transformation, wherein a matrix with data to be transformed is present in the original area,

characterized in that

tensors $[\underline{T_i}]$, i = 1, ..., a, derived from the transformation tensor $[\underline{T}]$ of the two-dimensional transformation, are used,

wherein the transformation tensor $[\underline{T}]$ is formed from the unidimensional transformation matrix $[A]$ by forming the Kronecker product of the transformation matrix $[A]$,

$$[T] = [A] \otimes [A],$$

wherein Dim $[\underline{T}] = n^2 \times n^2$, if Dim $[A] = n \times n$, and

wherein the transformation tensor $[\underline{T}]$ is reduced to a product of derived tensors $[\underline{T_i}]$, i = 1, ..., a,

wherein the tensors $[\underline{T_i}]$ either contain only an element unequal to zero per line or column or only elements of the amount {-1, 0, +1} and the derived tensors $[\underline{T_i}]$ are invertible,

that the data to be transformed are stored as elements of a data set,

that a matrix-vector-multiplication with one of the derived tensors $[\underline{T_i}]$ is performed by means of a stored data set in a multiplication and adding device (M + A), wherein a matrix-matrix-multiplication is performed with the derived tensors which contain only elements of the amount {-1, 0, +1} in that the tensor is reduced to two matrices which are applied to the data set and wherein a matrix-vector-multiplication is performed with the tensors which per line or column contain only an element unequal to zero,

that the result of the s-th multiplication s = 1, ..., a-1 with the derived tensor $[\underline{T_{a+1-s}}]$ is stored and is the factor of the (s+1)-th multiplication,

that the first multiplication with the stored vector is performed with the data of the original area and the result of the a-th multiplication with the derived tensor $[\underline{T_1}]$ contains the spectral coefficients in the form of a vector and

that the data flow and the multiplication and adding device (M + A) are controlled by means of a control unit (St).

4. A method for performing a two-dimensional spectral inverse transformation, wherein a matrix with data to be inversely transformed is present in the spectral range,

characterized in that

inverse tensors $[\underline{T_i^{-1}}]$, i = 1, ..., a, derived from the inverse transformation tensor $[\underline{T^{-1}}]$ are used

wherein the inverse transformation tensor $[\underline{T^{-1}}]$ is formed from the unidimensional inverse transformation matrix $[A^{-1}]$ by forming the Kronecker product of the inverse transformation matrix $[A^{-1}]$,

$$[\underline{T^{-1}}] = [A^{-1}] \otimes [A^{-1}],$$

wherein Dim $[\underline{T^{-1}}] = n^2 \times n^2$, if Dim $[A^{-1}] = n \times n$, and

wherein the inverse transformation tensor $[\underline{T^{-1}}]$ is reduced to a product of derived tensors $[\underline{T_i^{-1}}]$, i = 1, ..., a,

wherein the derived inverse tensors $[\underline{T_i^{-1}}]$ either contain only an element unequal to zero per line or column, or only elements of the amounts {-1, 0, +1} and the derived inverse tensors $[\underline{T_i^{-1}}]$ can be inverted,

that the coefficients to be inversely transformed are stored as elements of a data set,

that a multiplication with one of the derived tensors $[\underline{T_i^{-1}}]$ is performed in a multiplication and adding device (M + A), wherein a matrix-matrix-multiplication is performed with the derived inverse tensors which contain only elements of the amount {-1, 0, +1} in that the tensor is reduced to two matrices which are applied to the data set and wherein a matrix-vector-multiplication is performed with the tensors which per line or column contain only an element unequal to zero,

that the result of the s-th multiplication s = 1, ..., a-1 with the derived inverted tensor $[\underline{T_{a+1-s}^{-1}}]$ is stored and is the factor of the (s+1)-th multiplication,

that the first multiplication with the stored vector is performed with the coefficient of the spectral area and the result of the a-th multiplication with the derived inverse tensor $[\underline{T_1^{-1}}]$ contains the data of the original area in the form of a vector and

that the data flow and the multiplication and adding device (M + A) are controlled by means of a control unit (St).

5. A method for performing a two-dimensional spectral transformation or inverse spectral transformation in accordance with one of claims 1 to 4, characterized in that derived tensors $[\underline{T_i}]$, i = 1, ..., a, or derived inverse tensors $[\underline{T_i^{-1}}]$, i = 1, ..., a, are used, which are stored in tensor memories ($T_1$, ..., $T_8$) as two-dimensional fields.

6. A method for performing a two-dimensional spectral transformation or inverse spectral transformation in accordance with one of claims 1 to 4, characterized in that only the relevant elements of the derived tensors $[\underline{T_i}]$, i = 1, ..., a, or derived inverse tensors $[\underline{T_i^{-1}}]$, i = 1, ..., a, are stored in memories.

7. A method for performing a two-dimensional spectral transformation or inverse spectral transformation in accordance with one of claims 1 to 4, characterized in that the data to be transformed or the coefficients to be inversely transformed and the results of the matrix-vector-multiplication are written into a memory (S).

8. A method for performing a two-dimensional spectral transformation or inverse spectral transformation in accordance with one of claims 1 to 4, characterized in that the data to be transformed or the coefficients to be inversely transformed are written into a first memory and that the results of the matrix-vector-multiplication are written into further memories.

9. A method for performing a two-dimensional spectral transformation or inverse spectral transformation in accordance with one of claims 1 to 4, characterized in that the data to be transformed or the coefficients to be inversely transformed are written into a first partial memory (S1), that the result of the first matrix-vector-multiplication is written into a second memory (S2), that the results of the further matrix-vector-multiplications are alternately written into one of the two partial memories (S1, S2) in such a way that the matrix-vector multiplication is performed with the contents of the one partial memory and the result of this multiplication is written into the other partial memory.

10. A method for performing a two-dimensional spectral transformation or inverse spectral transformation in accordance with claim 7, characterized in that several parallel additions are performed with the multiplication and adding device (M + A) and the intermediate results are stored in the multiplication and adding device (M + A) in registers (R), and that the data to be transformed or the coefficients to be inversely transformed and the results of the matrix-vector multiplications are always stored on the same memory spaces of the memory (S).

11. A method for performing a two-dimensional spectral transformation in accordance with claim 1, characterized in that the data to be transformed and the results of the matrix-vector-multiplications are respectively written into a first partial memory (S1) and are shifted after each multiplication into a second partial memory (S2), from where they are read out for the next multiplication.

12. A method for performing a two-dimensional spectral transformation or inverse spectral transformation in accordance with one of claims 1 to 11, characterized in that the multiplication and adding device (M + A) is controlled by the control unit in such a way that only multiplications and additions with relevant tensor elements are performed.

13. A method for performing a two-dimensional spectral transformation or inverse spectral transformation in accordance with claim 10, characterized in that the control unit operates in the manner of a state machine which cyclically processes state vectors, wherein the state vectors contain control signals for the multiplication and adding unit, the addressing of the memories and the addressing of the tensor memories.

14. A method for performing a two-dimensional spectral transformation or inverse spectral transformation in accordance with claim 10, characterized in that the control unit operates in the manner of a state machine which cyclically processes state vectors, wherein the state vectors contain control signals for the multiplication and adding unit, the addressing of the memories and the relevant elements of the derived tensors or the derived inverse tensors.

15. Use of the method for performing a two-dimensional spectral transformation or inverse spectral transformation in accordance with one of claims 1 to 12, for image signals obtained by point-by-point scanning of an image, which are transformed from the original area into the spectral area for reducing the amount of data.

## Revendications

1. Procédé pour effectuer une transformation spectrale bidimensionnelle, selon lequel on dispose d'une matrice avec des données à transformer dans le domaine original, caractérisé en ce
   que l'on utilise des tenseurs $[ T_i ]$, où i = 1, ..., a, dérivés du tenseur de transformation [ T ] de la transformation bidimensionnelle,
   le tenseur de transformation [ T ] étant formé à partir de la matrice de transformation unidimensionnelle [ A ] par formation du produit de Kronecker de la matrice de transformation [ A ]
   $$[ T ] = [ A ] \otimes [ A ],$$
   où la dimension de $[ T ] = n^2 \times n^2$ lorsque la dimension de [ A ] = n x n,
   et le tenseur de transformation [ T ] étant décomposé en un produit de tenseurs dérivés $[ T_i ]$, où i = 1, ..., a, les tenseurs $[ T_i ]$ contiennent ou bien, par ligne ou colonne, seulement un élément non nul ou alors seulement des éléments de la quantité { -1, 0, +1 }, et les tenseurs dérivés $[ T_i ]$ étant réversibles,
   que l'on mémorise les données à transformer comme des éléments d'un vecteur,
   que l'on effectue une multiplication matrice-vecteur, dans un dispositif de multiplication et d'addition (M + A), entre un vecteur mémorisé et l'un des tenseurs dérivés $[ T_i ]$,
   que l'on mémorise le résultat de la s-ième multiplication matrice-vecteur, où s = 1, ..., a-1 avec le tenseur dérivé $[ T_{a+1-s} ]$, ledit résultat étant un facteur de la (s+1)-ième multiplication matrice-vecteur,
   que l'on effectue la première multiplication matrice-vecteur avec le vecteur mémorisé renfermant les données du domaine original, le résultat de la a-ième multiplication matrice-vecteur avec le tenseur dérivé

$[ T_1 ]$ contenant les coefficients spectraux sous la forme d'un vecteur et que l'on commande le flux de données et le dispositif de multiplication et d'addition (M + A) au moyen d'une unité de commande (St).

2. Procédé pour la mise en oeuvre d'une transformation spectrale bidimensionnelle inverse, selon lequel on dispose d'une matrice avec des données à soumettre à une transformation inverse dans le domaine spectral, caractérisé en ce

que l'on utilise des tenseurs $[ T_i^{-1} ]$, où i = 1, ..., a, dérivés du tenseur de transformation inverse $[ T^{-1} ]$ de la transformation bidimensionnelle inverse,

le tenseur de transformation inverse $[ T^{-1} ]$ étant formé à partir de la matrice de transformation inverse unidimensionnelle $[ A^{-1} ]$ par formation du produit de Kronecker de la matrice de transformation inverse $[ A^{-1} ]$

$$[T^{-1}] = [ A^{-1} ] \otimes [ A^{-1} ],$$

où la dimension $[T^{-1}] = n^2 \times n^2$ lorsque la dimension $[ A^{-1} ] = n \times n$,

et le tenseur de transformation inverse $[ T^{-1} ]$ étant décomposé en un produit de tenseurs dérivés $[ T_i^{-1} ]$, où i = 1, ..., a, les tenseurs dérivés inverses $[ T_i^{-1} ]$ contenant au bien, par ligne ou colonne, seulement un élément non nul, ou contenant seulement des éléments de la quantité { -1,0,+1 } et les tenseurs inverses dérivés $[ T_i^{-1} ]$ étant réversibles,

que l'on mémorise les coefficients à soumettre à la transformation inverse comme des éléments d'un vecteur,

que l'on effectue, dans un dispositif de multiplication et d'addition (M + A), une multiplication matrice-vecteur entre un vecteur mémorisé et l'un des tenseurs dérivés $[ T_i^{-1} ]$,

que l'on mémorise le résultat de la s-ième multiplication matrice-vecteur, où s = 1, ..., a-1, avec le tenseur inverse dérivé $[ T_{a+1-s}^{-1} ]$, ledit résultat étant un facteur de la (s+l)-ième multiplication matrice-vecteur,

que l'on effectue la première multiplication matrice-vecteur avec le vecteur mémorisé renfermant les coefficients du domaine spectral, le résultat de la a-ième multiplication matrice-vecteur avec le tenseur inverse dérivé $[ T_1^{-1} ]$ contenant les données du domaine original sous la forme d'un vecteur, et

que l'on commande le flux de données et le dispositif de multiplication et d'addition (M + A) au moyen d'une unité de commande (St).

3. Procédé pour la mise en oeuvre d'une transformation spectrale bidimensionnelle, selon lequel on dispose d'une matrice avec des données à transformer dans le domaine original, caractérisé en ce

que l'on utilise des tenseurs $[ T_i ]$, où i = 1, ..., a, dérivés du tenseur de transformation $[ T ]$ de la transformation bidimensionnelle,

le tenseur de transformation $[ T ]$ étant formé à partir de la matrice de transformation unidimensionnelle $[ A ]$ par formation du produit de Kronecker de la matrice de transformation $[ A ]$

$$[ T ] = [ A ] \otimes [ A ],$$

où la dimension de $[ T ] = n^2 \times n^2$ lorsque la dimension de $[ A ] = n \times n$,

et le tenseur de transformation $[ T ]$ étant décomposé en un produit de tenseurs dérivés $[ T_i ]$, où i = 1, ..., a, les tenseurs $[ T_i ]$ contenant ou bien, par ligne ou colonne, seulement un élément non nul ou alors seulement des éléments de la quantité { -1, 0, +1 }, et les tenseurs dérivés $[ T_i ]$ étant réversibles,

que l'on mémorise les données à transformer comme des éléments d'un ensemble de données,

que l'on effectue, dans un dispositif de multiplication et d'addition (M + A), une multiplication entre un ensemble de données mémorisé et l'un des tenseurs dérivés $[ T_i ]$, une multiplication matrice-matrice étant effectuée avec les tenseurs dérivés contenant seulement des éléments de la quantité {-1,0,+1}, du fait que l'on décompose le tenseur en deux matrices appliquées à l'ensemble de données, et une multiplication matrice-vecteur étant effectuée entre les tenseurs contenant seulement un élément non nul par ligne ou colonne et l'ensemble de données mémorisé,

que l'on mémorise le résultat de la s-ième multiplication, où s = 1,..., a-1, par le tenseur dérivé $[ T_{a+1-s} ]$, ledit résultat étant un facteur de la (s+1)-ième multiplication,

que l'on effectue la première multiplication avec le vecteur mémorisé renfermant les données du domaine original, le résultat de la a-ième multiplication avec le tenseur dérivé $[ T_1 ]$ contenant les coefficients spectraux sous la forme d'un vecteur, et

que l'on commande le flux de données et le dispositif de multiplication et d'addition (M + A) au moyen d'une unité de commande (St).

4. Procédé pour la mise en oeuvre d'une transformation spectrale bidimensionnelle inverse, selon lequel on dispose d'une matrice avec des coefficients à soumettre à la transformation inverse dans le domaine spectral, caractérisé en ce

que l'on utilise des tenseurs inverses $[T_i^{-1}]$, où i = 1, ..., a, dérivés du tenseur de transformation inverse $[T^{-1}]$ de la transformation inverse bidimensionnelle,

le tenseur de transformation inverse $[T^{-1}]$ étant formé à partir de la matrice de transformation inverse unidimensionnelle $[A^{-1}]$ par formation du produit de Kronecker de la matrice de transformation inverse $[A^{-1}]$

$$[T^{-1}] = [A^{-1}] \otimes [A^{-1}],$$

où la dimension de $[T^{-1}] = n^2 \times n^2$ lorsque la dimension $[A^{-1}] = n \times n$,

et le tenseur de transformation inverse $[T^{-1}]$ étant décomposé en un produit de tenseurs dérivés $[T_i^{-1}]$, où i = 1, ..., a,

les tenseurs dérivés inverses $[T_i^{-1}]$ contenant ou bien seulement un élément non nul par ligne ou colonne, ou contenant seulement des éléments de la quantité $\{-1, 0, +1\}$, et les tenseurs inverses dérivés $[T_i^{-1}]$ étant réversibles,

que l'on mémorise les coefficients à soumettre à la transformation inverse comme des éléments d'un ensemble de données,

que l'on effectue, dans un dispositif de multiplication et d'addition (M + A), une multiplication entre un ensemble de données mémorisé et l'un des tenseurs dérivés $[T_i^{-1}]$, une multiplication matrice-matrice étant effectuée avec les tenseurs inverses dérivés contenant seulement des éléments de la quantité $\{-1, 0, +1\}$, du fait que l'on décompose le tenseur en deux matrices appliquées à l'ensemble de données, et une multiplication matrice-vecteur étant effectuée entre les tenseurs contenant seulement un élément non nul par ligne ou colonne et l'ensemble de données mémorisé,

que l'on mémorise le résultat de la s-ième multiplication, où s = 1, ..., a-1, avec le tenseur inverse dérivé $[T_{a+1-s}^{-1}]$, lequel résultat est un facteur de la (s+1)-ième multiplication,

que l'on effectue la première multiplication avec le vecteur mémorisé renfermant les coefficients du domaine spectral, le résultat de la a-ième multiplication par le tenseur inverse dérivé $[T_1^{-1}]$ contenant les données du domaine original sous la forme d'un vecteur,

et que l'on commande le flux de données et le dispositif de multiplication et d'addition (M + A) au moyen d'une unité de commande (St).

5. Procédé pour effectuer une transformation spectrale bidimensionnelle directe ou inverse selon une des revendications 1 à 4, caractérisé en ce que l'on utilise des tenseurs dérivés $[T_i]$, où i = 1,...,a, ou des tenseurs inverses dérivés $[T^{-1}]$, où i = 1,...,a, que l'on mémorise comme des champs bidimensionnels dans des mémoires de tenseurs $(T_1,...,T_a)$.

6. Procédé pour effectuer une transformation spectrale bidimensionnelle directe ou inverse selon une des revendications 1 à 4, caractérisé en ce que l'on mémorise seulement, dans des mémoires les éléments pertinents des tenseurs dérivés $[T_i]$, où i = 1,...,a, ou des tenseurs inverses dérivés $[T_i^{-1}]$, où i = 1,...,a.

7. Procédé pour effectuer une transformation spectrale bidimensionnelle directe ou inverse selon une des revendications 1 à 4, caractérisé en ce que l'on inscrit les données à transformer, ou les coefficients à soumettre à une transformation inverse, et les résultats de la multiplication matrice-vecteur dans une mémoire (S).

8. Procédé pour effectuer une transformation spectrale bidimensionnelle directe ou inverse selon une des revendications 1 à 4, caractérisé en ce que l'on inscrit les données à transformer, ou les coefficients à soumettre à une transformation inverse, dans une première mémoire et que l'on inscrit les résultats de la multiplication matrice-vecteur en d'autres mémoires.

9. Procédé pour effectuer une transformation spectrale bidimensionnelle directe ou inverse selon une des revendications 1 à 4, caractérisé en ce que l'on inscrit les données à transformer, ou les coefficients à soumettre à une transformation inverse, dans une première mémoire partielle (S1), que l'on inscrit le résultat de la première multiplication matrice-vecteur dans une seconde mémoire partielle (S2) et que l'on inscrit les résultats des autres multiplications matrice-vecteur alternativement dans l'une des deux mémoires partielles (S1, S2), de manière que la multiplication matrice-vecteur soit effectuée avec le contenu de l'une des mémoires partielles et que le résultat de cette multiplication soit inscrit dans l'autre mémoire partielle.

10. Procédé pour effectuer une transformation spectrale bidimensionnelle directe ou inverse selon la revendication 7, caractérisé en ce que l'on effectue plusieurs additions parallèles au moyen du dispositif de multiplication et d'addition (M + A) et on retient les résultats intermédiaires dans des registres (R) de ce dispositif, et que l'on mémorise les données à transformer ou les coefficients à soumettre à une transformation inverse et les résultats des multiplications matrice-vecteur toujours aux mêmes emplacements de mémoire de la mémoire (S).

**11.** Procédé pour effectuer une transformation spectrale bidimensionnelle selon la revendication 1, caractérisé en ce que l'on inscrit chaque fois les données à transformer et les résultats des multiplications matrice-vecteur dans une première mémoire partielle (S1) et, après chaque multiplication, on les transfère dans une seconde mémoire partielle (S2), d'où elles sont extraites en vue de la multiplication suivante.

**12.** Procédé pour effectuer une transformation spectrale bidimensionnelle directe ou inverse selon une des revendications 1 à 12, caractérisé en ce que le dispositif de multiplication et d'addition (M + A) est commandé par l'unité de commande de manière que seulement des multiplications et des additions avec des éléments de tenseur pertinents peuvent être effectuées.

**13.** Procédé pour effectuer une transformation spectrale bidimensionnelle directe ou inverse selon la revendication 10, caractérisé en ce que le dispositif de commande fonctionne comme une machine d'état qui traite cycliquement des vecteurs d'état, les vecteurs d'état contenant des signaux de commande pour le dispositif de multiplication et d'addition, l'adressage des mémoires et l'adressage des mémoires de tenseurs.

**14.** Procédé pour effectuer une transformation spectrale bidimensionnelle directe ou inverse selon la revendication 10, caractérisé en ce que le dispositif de commande fonctionne comme une machine d'état qui traite cycliquement des vecteurs d'état, les vecteurs d'état contenant des signaux de commande pour le dispositif de multiplication et d'addition, l'adressage des mémoires et les éléments pertinents des tenseurs dérivés ou des tenseurs inverses dérivés.

**15.** Application du procédé pour effectuer une transformation spectrale bidimensionnelle directe ou inverse selon une des revendications 1 à 12 à des signaux d'image obtenus par une exploration ou analyse point par point d'une image, qui sont transformés, en vue de la réduction de la quantité de données, du domaine original dans le domaine spectral.

Fig. 1

$$[P2] = \begin{bmatrix} 1 & \cdot & \cdot & \cdot & \cdot & \cdot & \cdot & \cdot \\ \cdot & 1 & \cdot & \cdot & \cdot & \cdot & \cdot & \cdot \\ \cdot & \cdot & \cdot & 1 & \cdot & \cdot & \cdot & \cdot \\ \cdot & \cdot & 1 & \cdot & \cdot & \cdot & \cdot & \cdot \\ \cdot & \cdot & \cdot & \cdot & \cdot & \cdot & 1 & \cdot \\ \cdot & \cdot & \cdot & \cdot & \cdot & \cdot & \cdot & 1 \\ \cdot & \cdot & \cdot & \cdot & \cdot & 1 & \cdot & \cdot \\ \cdot & \cdot & \cdot & \cdot & 1 & \cdot & \cdot & \cdot \end{bmatrix}$$

$$[M8] = \begin{bmatrix} 1 & \cdot & \cdot & \cdot & 1 & \cdot & \cdot & \cdot \\ \cdot & 1 & \cdot & \cdot & \cdot & 1 & \cdot & \cdot \\ \cdot & \cdot & 1 & \cdot & \cdot & \cdot & 1 & \cdot \\ \cdot & \cdot & \cdot & 1 & \cdot & \cdot & \cdot & 1 \\ 1 & \cdot & \cdot & \cdot & -1 & \cdot & \cdot & \cdot \\ \cdot & 1 & \cdot & \cdot & \cdot & -1 & \cdot & \cdot \\ \cdot & \cdot & 1 & \cdot & \cdot & \cdot & -1 & \cdot \\ \cdot & \cdot & \cdot & 1 & \cdot & \cdot & \cdot & -1 \end{bmatrix}$$

$$[M7] = \begin{bmatrix} 1 & \cdot & \cdot & \cdot & \cdot & \cdot & \cdot & \cdot \\ \cdot & 1 & \cdot & \cdot & \cdot & \cdot & \cdot & \cdot \\ \cdot & \cdot & 1 & \cdot & \cdot & \cdot & \cdot & \cdot \\ \cdot & \cdot & \cdot & 1 & \cdot & \cdot & \cdot & \cdot \\ \cdot & \cdot & \cdot & \cdot & X1 & \cdot & \cdot & \cdot \\ \cdot & \cdot & \cdot & \cdot & \cdot & X3 & \cdot & \cdot \\ \cdot & \cdot & \cdot & \cdot & \cdot & \cdot & X7 & \cdot \\ \cdot & \cdot & \cdot & \cdot & \cdot & \cdot & \cdot & X5 \end{bmatrix}$$

$$[M6] = \begin{bmatrix} 1 & \cdot & 1 & \cdot & \cdot & \cdot & \cdot & \cdot \\ \cdot & 1 & \cdot & 1 & \cdot & \cdot & \cdot & \cdot \\ 1 & \cdot & -1 & \cdot & \cdot & \cdot & \cdot & \cdot \\ \cdot & 1 & \cdot & -1 & \cdot & \cdot & \cdot & \cdot \\ \cdot & \cdot & \cdot & \cdot & 1 & \cdot & 1 & \cdot \\ \cdot & \cdot & \cdot & \cdot & \cdot & 1 & \cdot & 1 \\ \cdot & \cdot & \cdot & \cdot & 1 & \cdot & -1 & \cdot \\ \cdot & \cdot & \cdot & \cdot & \cdot & 1 & \cdot & -1 \end{bmatrix}$$

Fig. 2a

$$[M5] = \begin{bmatrix}
1 & \cdot & \cdot & \cdot & \cdot & \cdot & \cdot & \cdot \\
\cdot & 1 & \cdot & \cdot & \cdot & \cdot & \cdot & \cdot \\
\cdot & \cdot & X2 & \cdot & \cdot & \cdot & \cdot & \cdot \\
\cdot & \cdot & \cdot & X6 & \cdot & \cdot & \cdot & \cdot \\
\cdot & \cdot & \cdot & \cdot & 1 & \cdot & \cdot & \cdot \\
\cdot & \cdot & \cdot & \cdot & \cdot & 1 & \cdot & \cdot \\
\cdot & \cdot & \cdot & \cdot & \cdot & \cdot & X2 & \cdot \\
\cdot & \cdot & \cdot & \cdot & \cdot & \cdot & \cdot & X6
\end{bmatrix}$$

$$[M4] = \begin{bmatrix}
1 & 1 & \cdot & \cdot & \cdot & \cdot & \cdot & \cdot \\
1 & -1 & \cdot & \cdot & \cdot & \cdot & \cdot & \cdot \\
\cdot & \cdot & 1 & 1 & \cdot & \cdot & \cdot & \cdot \\
\cdot & \cdot & 1 & -1 & \cdot & \cdot & \cdot & \cdot \\
\cdot & \cdot & \cdot & \cdot & 1 & 1 & \cdot & \cdot \\
\cdot & \cdot & \cdot & \cdot & 1 & -1 & \cdot & \cdot \\
\cdot & \cdot & \cdot & \cdot & \cdot & \cdot & 1 & 1 \\
\cdot & \cdot & \cdot & \cdot & \cdot & \cdot & 1 & -1
\end{bmatrix}$$

$$[M3] = \begin{bmatrix}
1 & \cdot & \cdot & \cdot & \cdot & \cdot & \cdot & \cdot \\
\cdot & X4 & \cdot & \cdot & \cdot & \cdot & \cdot & \cdot \\
\cdot & \cdot & 1 & \cdot & \cdot & \cdot & \cdot & \cdot \\
\cdot & \cdot & \cdot & X4 & \cdot & \cdot & \cdot & \cdot \\
\cdot & \cdot & \cdot & \cdot & 1 & \cdot & \cdot & \cdot \\
\cdot & \cdot & \cdot & \cdot & \cdot & X4 & \cdot & \cdot \\
\cdot & \cdot & \cdot & \cdot & \cdot & \cdot & 1 & \cdot \\
\cdot & \cdot & \cdot & \cdot & \cdot & \cdot & \cdot & X4
\end{bmatrix}$$

$$[M2] = \begin{bmatrix}
1 & \cdot & \cdot & \cdot & \cdot & \cdot & \cdot & \cdot \\
\cdot & 1 & \cdot & \cdot & \cdot & \cdot & \cdot & \cdot \\
\cdot & \cdot & 1 & \cdot & \cdot & \cdot & \cdot & \cdot \\
\cdot & \cdot & 1 & 1 & \cdot & \cdot & \cdot & \cdot \\
\cdot & \cdot & \cdot & \cdot & 1 & \cdot & \cdot & \cdot \\
\cdot & \cdot & \cdot & \cdot & \cdot & 1 & \cdot & \cdot \\
\cdot & \cdot & \cdot & \cdot & \cdot & \cdot & 1 & \cdot \\
\cdot & \cdot & \cdot & \cdot & \cdot & \cdot & 1 & 1
\end{bmatrix}$$

Fig. 2b

$$[M1] \; = \; \begin{bmatrix} 1 & \cdot & \cdot & \cdot & \cdot & \cdot & \cdot & \cdot \\ \cdot & 1 & \cdot & \cdot & \cdot & \cdot & \cdot & \cdot \\ \cdot & \cdot & 1 & \cdot & \cdot & \cdot & \cdot & \cdot \\ \cdot & \cdot & \cdot & 1 & \cdot & \cdot & \cdot & \cdot \\ \cdot & \cdot & \cdot & \cdot & 1 & \cdot & \cdot & \cdot \\ \cdot & \cdot & \cdot & \cdot & \cdot & 1 & 1 & \cdot \\ \cdot & \cdot & \cdot & \cdot & 1 & \cdot & 1 & \cdot \\ \cdot & \cdot & \cdot & \cdot & \cdot & 1 & \cdot & 1 \end{bmatrix}$$

$$[P1] \; = \; \begin{bmatrix} C4 & \cdot & \cdot & \cdot & \cdot & \cdot & \cdot & \cdot \\ \cdot & \cdot & \cdot & \cdot & 1 & \cdot & \cdot & \cdot \\ \cdot & \cdot & 1 & \cdot & \cdot & \cdot & \cdot & \cdot \\ \cdot & \cdot & \cdot & \cdot & \cdot & \cdot & 1 & \cdot \\ \cdot & 1 & \cdot & \cdot & \cdot & \cdot & \cdot & \cdot \\ \cdot & \cdot & \cdot & \cdot & \cdot & 1 & \cdot & \cdot \\ \cdot & \cdot & \cdot & 1 & \cdot & \cdot & \cdot & \cdot \\ \cdot & \cdot & \cdot & \cdot & \cdot & \cdot & \cdot & 1 \end{bmatrix}$$

Fig.2c

$$[T_{10}^{\ T}] = \begin{bmatrix} [P2] & \cdot & \cdot & \cdot & \cdot & \cdot & \cdot & \cdot \\ \cdot & [P2] & \cdot & \cdot & \cdot & \cdot & \cdot & \cdot \\ \cdot & \cdot & \cdot & [P2] & \cdot & \cdot & \cdot & \cdot \\ \cdot & \cdot & [P2] & \cdot & \cdot & \cdot & \cdot & \cdot \\ \cdot & \cdot & \cdot & \cdot & \cdot & \cdot & [P2] & \cdot \\ \cdot & \cdot & \cdot & \cdot & \cdot & \cdot & \cdot & [P2] \\ \cdot & \cdot & \cdot & \cdot & \cdot & [P2] & \cdot & \cdot \\ \cdot & \cdot & \cdot & \cdot & [P2] & \cdot & \cdot & \cdot \end{bmatrix}$$

$$[T_{9}^{\ T}] = \begin{bmatrix} [M8] & \cdot & \cdot & \cdot & [M8] & \cdot & \cdot & \cdot \\ \cdot & [M8] & \cdot & \cdot & \cdot & [M8] & \cdot & \cdot \\ \cdot & \cdot & [M8] & \cdot & \cdot & \cdot & [M8] & \cdot \\ \cdot & \cdot & \cdot & [M8] & \cdot & \cdot & \cdot & [M8] \\ [M8] & \cdot & \cdot & \cdot & -[M8] & \cdot & \cdot & \cdot \\ \cdot & [M8] & \cdot & \cdot & \cdot & -[M8] & \cdot & \cdot \\ \cdot & \cdot & [M8] & \cdot & \cdot & \cdot & -[M8] & \cdot \\ \cdot & \cdot & \cdot & [M8] & \cdot & \cdot & \cdot & -[M8] \end{bmatrix}$$

$$[T_{8}^{\ T}] = \begin{bmatrix} [M7] & \cdot & \cdot & \cdot & \cdot & \cdot & \cdot & \cdot \\ \cdot & [M7] & \cdot & \cdot & \cdot & \cdot & \cdot & \cdot \\ \cdot & \cdot & [M7] & \cdot & \cdot & \cdot & \cdot & \cdot \\ \cdot & \cdot & \cdot & [M7] & \cdot & \cdot & \cdot & \cdot \\ \cdot & \cdot & \cdot & \cdot & X1\,[M7] & \cdot & \cdot & \cdot \\ \cdot & \cdot & \cdot & \cdot & \cdot & X3\,[M7] & \cdot & \cdot \\ \cdot & \cdot & \cdot & \cdot & \cdot & \cdot & X7\,[M7] & \cdot \\ \cdot & \cdot & \cdot & \cdot & \cdot & \cdot & \cdot & X5\,[M7] \end{bmatrix}$$

$$[T_{7}^{\ T}] = \begin{bmatrix} [M6] & \cdot & [M6] & \cdot & \cdot & \cdot & \cdot & \cdot \\ \cdot & [M6] & \cdot & [M6] & \cdot & \cdot & \cdot & \cdot \\ [M6] & \cdot & -[M6] & \cdot & \cdot & \cdot & \cdot & \cdot \\ \cdot & [M6] & \cdot & -[M6] & \cdot & \cdot & \cdot & \cdot \\ \cdot & \cdot & \cdot & \cdot & [M6] & \cdot & [M6] & \cdot \\ \cdot & \cdot & \cdot & \cdot & \cdot & [M6] & \cdot & [M6] \\ \cdot & \cdot & \cdot & \cdot & [M6] & \cdot & -[M6] & \cdot \\ \cdot & \cdot & \cdot & \cdot & \cdot & [M6] & \cdot & -[M6] \end{bmatrix}$$

Fig. 3a

22

$$[T_6^T] = \begin{bmatrix} [M5] & \cdot & \cdot & \cdot & \cdot & \cdot & \cdot & \cdot \\ \cdot & [M5] & \cdot & \cdot & \cdot & \cdot & \cdot & \cdot \\ \cdot & \cdot & x2[M5] & \cdot & \cdot & \cdot & \cdot & \cdot \\ \cdot & \cdot & \cdot & x6[M5] & \cdot & \cdot & \cdot & \cdot \\ \cdot & \cdot & \cdot & \cdot & [M5] & \cdot & \cdot & \cdot \\ \cdot & \cdot & \cdot & \cdot & \cdot & [M5] & \cdot & \cdot \\ \cdot & \cdot & \cdot & \cdot & \cdot & \cdot & x2[M5] & \cdot \\ \cdot & \cdot & \cdot & \cdot & \cdot & \cdot & \cdot & x6[M5] \end{bmatrix}$$

$$[T_5^T] = \begin{bmatrix} [M4] & [M4] & \cdot & \cdot & \cdot & \cdot & \cdot & \cdot \\ [M4] & -[M4] & \cdot & \cdot & \cdot & \cdot & \cdot & \cdot \\ \cdot & \cdot & [M4] & [M4] & \cdot & \cdot & \cdot & \cdot \\ \cdot & \cdot & [M4] & -[M4] & \cdot & \cdot & \cdot & \cdot \\ \cdot & \cdot & \cdot & \cdot & [M4] & [M4] & \cdot & \cdot \\ \cdot & \cdot & \cdot & \cdot & [M4] & -[M4] & \cdot & \cdot \\ \cdot & \cdot & \cdot & \cdot & \cdot & \cdot & [M4] & [M4] \\ \cdot & \cdot & \cdot & \cdot & \cdot & \cdot & [M4] & -[M4] \end{bmatrix}$$

$$[T_4^T] = \begin{bmatrix} [M3] & \cdot & \cdot & \cdot & \cdot & \cdot & \cdot & \cdot \\ \cdot & x4[M3] & \cdot & \cdot & \cdot & \cdot & \cdot & \cdot \\ \cdot & \cdot & [M3] & \cdot & \cdot & \cdot & \cdot & \cdot \\ \cdot & \cdot & \cdot & x4[M3] & \cdot & \cdot & \cdot & \cdot \\ \cdot & \cdot & \cdot & \cdot & [M3] & \cdot & \cdot & \cdot \\ \cdot & \cdot & \cdot & \cdot & \cdot & x4[M3] & \cdot & \cdot \\ \cdot & \cdot & \cdot & \cdot & \cdot & \cdot & [M3] & \cdot \\ \cdot & \cdot & \cdot & \cdot & \cdot & \cdot & \cdot & x4[M3] \end{bmatrix}$$

$$[T_3^T] = \begin{bmatrix} [M2] & \cdot & \cdot & \cdot & \cdot & \cdot & \cdot & \cdot \\ \cdot & [M2] & \cdot & \cdot & \cdot & \cdot & \cdot & \cdot \\ \cdot & \cdot & \cdot & [M2] & \cdot & \cdot & \cdot & \cdot \\ \cdot & \cdot & [M2] & [M2] & \cdot & \cdot & \cdot & \cdot \\ \cdot & \cdot & \cdot & \cdot & [M2] & \cdot & \cdot & \cdot \\ \cdot & \cdot & \cdot & \cdot & \cdot & [M2] & \cdot & \cdot \\ \cdot & \cdot & \cdot & \cdot & \cdot & \cdot & \cdot & [M2] \\ \cdot & \cdot & \cdot & \cdot & \cdot & \cdot & [M2] & [M2] \end{bmatrix}$$

Fig. 3b

$$[T_2^T] = \begin{bmatrix}
[M1] & \cdot & \cdot & \cdot & \cdot & \cdot & \cdot & \cdot \\
\cdot & [M1] & \cdot & \cdot & \cdot & \cdot & \cdot & \cdot \\
\cdot & \cdot & [M1] & \cdot & \cdot & \cdot & \cdot & \cdot \\
\cdot & \cdot & \cdot & [M1] & \cdot & \cdot & \cdot & \cdot \\
\cdot & \cdot & \cdot & \cdot & [M1] & \cdot & \cdot & \cdot \\
\cdot & \cdot & \cdot & \cdot & \cdot & [M1] & [M1] & \cdot \\
\cdot & \cdot & \cdot & \cdot & [M1] & \cdot & [M1] & \cdot \\
\cdot & \cdot & \cdot & \cdot & \cdot & [M1] & \cdot & [M1]
\end{bmatrix}$$

$$[T_1^T] = \begin{bmatrix}
c4[P1] & \cdot & \cdot & \cdot & \cdot & \cdot & \cdot & \cdot \\
\cdot & \cdot & \cdot & \cdot & [P1] & \cdot & \cdot & \cdot \\
\cdot & \cdot & [P1] & \cdot & \cdot & \cdot & \cdot & \cdot \\
\cdot & \cdot & \cdot & \cdot & \cdot & \cdot & [P1] & \cdot \\
\cdot & [P1] & \cdot & \cdot & \cdot & \cdot & \cdot & \cdot \\
\cdot & \cdot & \cdot & \cdot & \cdot & [P1] & \cdot & \cdot \\
\cdot & \cdot & \cdot & [P1] & \cdot & \cdot & \cdot & \cdot \\
\cdot & \cdot & \cdot & \cdot & \cdot & \cdot & \cdot & [P1]
\end{bmatrix}$$

Fig. 3c

24

$$[P2] = \begin{bmatrix} 1 & \cdot & \cdot & \cdot & \cdot & \cdot & \cdot & \cdot \\ \cdot & 1 & \cdot & \cdot & \cdot & \cdot & \cdot & \cdot \\ \cdot & \cdot & \cdot & 1 & \cdot & \cdot & \cdot & \cdot \\ \cdot & \cdot & 1 & \cdot & \cdot & \cdot & \cdot & \cdot \\ \cdot & \cdot & \cdot & \cdot & \cdot & \cdot & 1 & \cdot \\ \cdot & \cdot & \cdot & \cdot & \cdot & \cdot & \cdot & 1 \\ \cdot & \cdot & \cdot & \cdot & \cdot & 1 & \cdot & \cdot \\ \cdot & \cdot & \cdot & \cdot & 1 & \cdot & \cdot & \cdot \end{bmatrix}$$

$$[M8] = \begin{bmatrix} 1 & \cdot & \cdot & \cdot & 1 & \cdot & \cdot & \cdot \\ \cdot & 1 & \cdot & \cdot & \cdot & 1 & \cdot & \cdot \\ \cdot & \cdot & 1 & \cdot & \cdot & \cdot & 1 & \cdot \\ \cdot & \cdot & \cdot & 1 & \cdot & \cdot & \cdot & 1 \\ 1 & \cdot & \cdot & \cdot & -1 & \cdot & \cdot & \cdot \\ \cdot & 1 & \cdot & \cdot & \cdot & -1 & \cdot & \cdot \\ \cdot & \cdot & 1 & \cdot & \cdot & \cdot & -1 & \cdot \\ \cdot & \cdot & \cdot & 1 & \cdot & \cdot & \cdot & -1 \end{bmatrix}$$

$$[M7] = \begin{bmatrix} 1 & \cdot & \cdot & \cdot & \cdot & \cdot & \cdot & \cdot \\ \cdot & 1 & \cdot & \cdot & \cdot & \cdot & \cdot & \cdot \\ \cdot & \cdot & 1 & \cdot & \cdot & \cdot & \cdot & \cdot \\ \cdot & \cdot & \cdot & 1 & \cdot & \cdot & \cdot & \cdot \\ \cdot & \cdot & \cdot & \cdot & 1 & \cdot & \cdot & \cdot \\ \cdot & \cdot & \cdot & \cdot & \cdot & 1 & \cdot & \cdot \\ \cdot & \cdot & \cdot & \cdot & \cdot & \cdot & Z1 & \cdot \\ \cdot & \cdot & \cdot & \cdot & \cdot & \cdot & \cdot & Z2 \end{bmatrix}$$

$$[M6] = \begin{bmatrix} 1 & \cdot & 1 & \cdot & \cdot & \cdot & \cdot & \cdot \\ \cdot & 1 & \cdot & 1 & \cdot & \cdot & \cdot & \cdot \\ 1 & \cdot & -1 & \cdot & \cdot & \cdot & \cdot & \cdot \\ \cdot & 1 & \cdot & -1 & \cdot & \cdot & \cdot & \cdot \\ \cdot & \cdot & \cdot & \cdot & 1 & \cdot & 1 & \cdot \\ \cdot & \cdot & \cdot & \cdot & \cdot & 1 & \cdot & 1 \\ \cdot & \cdot & \cdot & \cdot & 1 & \cdot & -1 & \cdot \\ \cdot & \cdot & \cdot & \cdot & \cdot & 1 & \cdot & -1 \end{bmatrix}$$

Fig. 4a

$$[M5] = \begin{bmatrix} X4 & \cdot & \cdot & \cdot & \cdot & \cdot & \cdot & \cdot \\ \cdot & X4 & \cdot & \cdot & \cdot & \cdot & \cdot & \cdot \\ \cdot & \cdot & X2 & \cdot & \cdot & \cdot & \cdot & \cdot \\ \cdot & \cdot & \cdot & X6 & \cdot & \cdot & \cdot & \cdot \\ \cdot & \cdot & \cdot & \cdot & X1 & \cdot & \cdot & \cdot \\ \cdot & \cdot & \cdot & \cdot & \cdot & X3 & \cdot & \cdot \\ \cdot & \cdot & \cdot & \cdot & \cdot & \cdot & Z3 & \cdot \\ \cdot & \cdot & \cdot & \cdot & \cdot & \cdot & \cdot & Z4 \end{bmatrix}$$

$$|M4| = \begin{bmatrix} 1 & 1 & \cdot & \cdot & \cdot & \cdot & \cdot & \cdot \\ 1 & -1 & \cdot & \cdot & \cdot & \cdot & \cdot & \cdot \\ \cdot & \cdot & 1 & 1 & \cdot & \cdot & \cdot & \cdot \\ \cdot & \cdot & 1 & -1 & \cdot & \cdot & \cdot & \cdot \\ \cdot & \cdot & \cdot & \cdot & 1 & 1 & \cdot & \cdot \\ \cdot & \cdot & \cdot & \cdot & 1 & -1 & \cdot & \cdot \\ \cdot & \cdot & \cdot & \cdot & \cdot & \cdot & 1 & 1 \\ \cdot & \cdot & \cdot & \cdot & \cdot & \cdot & 1 & -1 \end{bmatrix}$$

$$[M3] = \begin{bmatrix} 1 & \cdot & \cdot & \cdot & \cdot & \cdot & \cdot & \cdot \\ \cdot & 1 & \cdot & \cdot & \cdot & \cdot & \cdot & \cdot \\ \cdot & \cdot & 1 & \cdot & \cdot & \cdot & \cdot & \cdot \\ \cdot & \cdot & \cdot & X4 & \cdot & \cdot & \cdot & \cdot \\ \cdot & \cdot & \cdot & \cdot & 1 & \cdot & \cdot & \cdot \\ \cdot & \cdot & \cdot & \cdot & \cdot & X4 & \cdot & \cdot \\ \cdot & \cdot & \cdot & \cdot & \cdot & \cdot & 1 & \cdot \\ \cdot & \cdot & \cdot & \cdot & \cdot & \cdot & \cdot & X4 \end{bmatrix}$$

$$[M2] = \begin{bmatrix} 1 & \cdot & \cdot & \cdot & \cdot & \cdot & \cdot & \cdot \\ \cdot & 1 & \cdot & \cdot & \cdot & \cdot & \cdot & \cdot \\ \cdot & \cdot & 1 & \cdot & \cdot & \cdot & \cdot & \cdot \\ \cdot & \cdot & 1 & 1 & \cdot & \cdot & \cdot & \cdot \\ \cdot & \cdot & \cdot & \cdot & 1 & \cdot & \cdot & \cdot \\ \cdot & \cdot & \cdot & \cdot & \cdot & 1 & \cdot & \cdot \\ \cdot & \cdot & \cdot & \cdot & \cdot & \cdot & 1 & \cdot \\ \cdot & \cdot & \cdot & \cdot & \cdot & \cdot & 1 & 1 \end{bmatrix}$$

Fig. 4b

$$[M1] = \begin{bmatrix} 1 & \cdot & \cdot & \cdot & \cdot & \cdot & \cdot & \cdot \\ \cdot & 1 & \cdot & \cdot & \cdot & \cdot & \cdot & \cdot \\ \cdot & \cdot & 1 & \cdot & \cdot & \cdot & \cdot & \cdot \\ \cdot & \cdot & \cdot & 1 & \cdot & \cdot & \cdot & \cdot \\ \cdot & \cdot & \cdot & \cdot & 1 & \cdot & \cdot & \cdot \\ \cdot & \cdot & \cdot & \cdot & \cdot & 1 & 1 & \cdot \\ \cdot & \cdot & \cdot & \cdot & 1 & \cdot & 1 & \cdot \\ \cdot & \cdot & \cdot & \cdot & \cdot & 1 & \cdot & 1 \end{bmatrix}$$

$$[P1] = \begin{bmatrix} 1 & \cdot & \cdot & \cdot & \cdot & \cdot & \cdot & \cdot \\ \cdot & \cdot & \cdot & \cdot & 1 & \cdot & \cdot & \cdot \\ \cdot & \cdot & 1 & \cdot & \cdot & \cdot & \cdot & \cdot \\ \cdot & \cdot & \cdot & \cdot & \cdot & \cdot & 1 & \cdot \\ \cdot & 1 & \cdot & \cdot & \cdot & \cdot & \cdot & \cdot \\ \cdot & \cdot & \cdot & \cdot & \cdot & 1 & \cdot & \cdot \\ \cdot & \cdot & \cdot & 1 & \cdot & \cdot & \cdot & \cdot \\ \cdot & \cdot & \cdot & \cdot & \cdot & \cdot & \cdot & 1 \end{bmatrix}$$

Fig. 4c

Fig. 5

Fig. 6